# EUROPÄISCHE PATENTSCHRIFT

(11) **EP 1 820 812 B1**
(45) Veröffentlichungstag und Bekanntmachung des Hinweises auf die Patenterteilung: **28.05.2008**
(21) Anmeldenummer: 06110130.9
(22) Anmeldetag: 17.02.2006
(51) Int. Cl.: C08F 220/26, C07C 69/54, C04B 24/26

(54) **Verfahren zum Herstellen eines Stoffgemisches mit zumindest einem Polyether(alkyl)acrylat**
Process for the preparation of a substance mixture comprising at least one polyether (alkyl)acrylate
Procédé pour la production d'un mélange de substances contenant au moins un polyéther (alkyl)acrylate

(43) Veröffentlichungstag der Anmeldung: 22.08.2007
(73) Patentinhaber: ECI - European Chemical Industries Ltd., Castleblayney (IE)
(72) Erfinder:
(74) Vertreter: Schmidt, Frank-Michael

(56) Entgegenhaltungen:
- EP-A- 0 254 950
- EP-A- 0 799 807
- FR-A- 2 739 850
- US-A1- 2004 077 813
- PATENT ABSTRACTS OF JAPAN Bd. 016, Nr. 071 (C-0913), 21. Februar 1992 (1992-02-21) & JP 03 264549 A (SANYO CHEM IND LTD), 25. November 1991 (1991-11-25)

## Beschreibung

Die vorliegende Erfindung betrifft ein Verfahren zum Herstellen eines Stoffgemisches mit zumindest einem Polyether(alkyl)acrylat. Die Erfindung betrifft ferner ein Stoffgemisch, welches durch das erfindungsgemäße Verfahren erhältlich ist sowie die Verwendung des Stoffgemisches zur Herstellung eines Dispergiermittels sowie ein Dispergiermittel, welches mit dem Stoffgemisch erhältlich ist.

Aus dem Stand der Technik sind zahlreiche Verfahren zum Herstellen von Polyalkylenglykol(alkyl)acrylaten bzw. Polyether(alkyl)acrylaten bekannt.

Beispielsweise beschreibt die EP 1 247 824 ein Verfahren zum Herstellen von Polycarbonsäuren, bei dessen erstem Schritt ein Polyalkylenglykol(alkyl)acrylat dargestellt wird. Bei diesem ersten Schritt wird ein Polyalkylenglykol mit einem Acrylsäure-Monomer in Gegenwart eines Katalysators zu einem Polyalkylenglykolmethacrylat umgesetzt. Als Katalysatoren werden Schwefelsäure, p-Toluolsulfonsäure und Methansulfonsäure vorgeschlagen. Direkt im Anschluß an die Herstellung des Polyalkylenglykolmethacrylats wird dieses mit einem Methacrylsäure-Monomer zu einer Polycarbonsäure copolymerisiert. Nachteilig an diesem Verfahren ist zum einen, daß das bei der Umsetzung entstehende Reaktionswasser entweder als Aceotrop mit einem zugesetzten Lösungsmittel abdestilliert oder durch Einleiten eines inerten Gases in die Reaktionsmischung ausgetrieben werden muß, und zum anderen, daß das in dem ersten Verfahrensschritt hergestellte Polyalkylenglykol(meth)acrylat umgehend nach dessen Herstellung weiter umgesetzt werden muß, da ansonsten eine unerwünschte Gelbildung stattfindet. Ein weiterer Nachteil des in dieser Druckschrift beschriebenen Verfahrens zur Herstellung eines Polyalkylenglykol(meth)acrylats ist, daß die Polyalkylenglykol(meth)acrylat-Monomere in dem Reaktionsgemisch bereits bei deren Herstellung miteinander dimerisieren. Bei Untersuchungen wurde gefunden, daß der Anteil des Dimerisierungsproduktes mehr als 10 Gew-% bezogen auf das Edukt Polyalkylenglykol beträgt.

Die EP 0 799 807 beschreibt ein Verfahren zur Dispergierung von Zement, wobei das verwendete Dispergiermittel aus einem Polymer gebildet wird, das durch Polymerisation einer Monomer-Verbindung dargestellt wird, die ein Monomer vom Typ Alkoxy-Polyalkylenglykolmono(meth)acrylat enthält, wobei das Monomer durch Reaktion eines Methacrylats mit einem Alkoxy-Polyalkylenglykol in Gegenwart eines basischen Katalysators hergestellt wird. Das entstehende aceotrope Gemisch aus Methanol und Methylmethacrylat wird destillativ aus dem Reaktionsgemisch entfernt, wobei es notwendig sein kann, daß dabei bei vermindertem Druck gearbeitet wird.

Eine gegenüber den beiden oben beschriebenen Verfahren elegantere Methode ist die Umsetzung eines Carbonsäureanhydrides mit einem Alkohol, da bei diesem Verfahren eine destillative Abtrennung eines Reaktionsproduktes zur Erzielung hoher Umsatzgrade nicht notwendig ist. Gemäß dem Stande der Technik werden bei dieser Umsetzung von Carbonsäureanhydriden tertiäre Amine, wie beispielsweise Triethylamin, 4-(Dimethylamino)-Pyridin oder saure Katalysatoren, wie beispielsweise konzentrierte Schwefelsäure oder p-Toluolsulfonsäure, eingesetzt.

Die WO 01/74736 beschreibt beispielsweise die Umsetzung eines Überschusses eines Methacrylsäureanhydridderivates mit einem Polyalkylenglykol in Gegenwart von Triethylamin als Katalysator. Zwar können bei der Umsetzung des Methacrylsäureanhydridderivates mit tertiären Aminen als Katalysatoren hohe Umsätze erreicht werden, jedoch sind die bei der Umsetzung dargestellten Lösungen nicht lagerstabil. Bereits bei der Umsetzung der Edukte kann eine Polymerisation des Produktes, d.h. des Polyalkylenglykol(meth)acrylats, stattfinden. Die Polymerisation des Polyalkylenglykol(meth)acrylsäureesters wird durch die Anwesenheit des Katalysators zur Herstellung des Produktes, d.h. des Triethylamins, gefördert. Bei der Anwesenheit von tertiären Aminen wird insbesondere die radikalische Polymerisation gefördert.

Ferner ist es bekannt, Polyalkylenglykol(alkyl)acrylate durch Umsetzung eines Überschusses eines Methacrylsäureanhydridderivates mit einem Polyalkylenglykol in Gegenwart von p-Toluolsulfonsäure darzustellen. Nachteilig an diesem Verfahren ist, daß auch bei einer Verwendung großer Mengen Katalysator und bei Reaktionszeiten von 20 Stunden keine Umsätze von mehr als 90 % bezogen auf das Edukt Polyalkylenglykol erreicht werden können. Ferner beeinflussen die großen Mengen Katalysator die Eigenschaften sowie das Reaktionsverhalten des Reaktionsproduktes.

Die FR-2739850 beschreibt ein Verfahren zum Herstellen eines Polyalkylenglykolmethacrylats aus Methyacrylsäureanhydrid, bei welchem als Katalysatoren Schwefelsäure, Bortrifluorid und Amine, wie beispielsweise Triethylamin und 1-Methylimidazol als Katalysatoren vorgeschlagen werden. In der Druckschrift wird ausgeführt, daß sich als Katalysator am besten das Amin 1-Methylimidazol, eignet.

Es ist Aufgabe der vorliegenden Erfindung ein Stoffgemisch mit zumindest einem Polyether(alkyl)acrylat bereitzustellen, welches eine bessere Lagerbeständigkeit aufweist und bei Verwendung geringer Katalysatormengen mit hohen Umsätzen bzw. Ausbeuten herstellbar ist und welches die Herstellung eines Dispergiermittels mit besseren Eigenschaften ermöglicht.

Die Aufgabe wird durch ein Verfahren gelöst, bei welchem zumindest ein Carbonsäureanhydrid der allgemeinen Formel 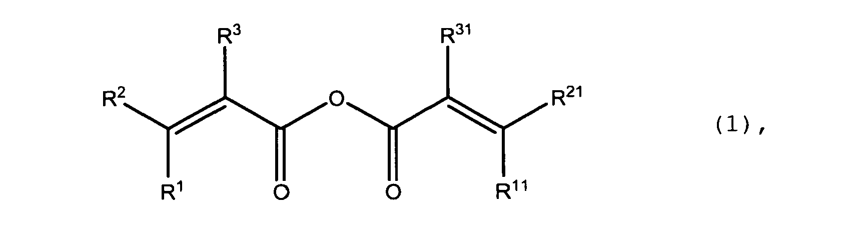 bei der R¹, R², R³, R¹¹, R²¹ und R³¹ jeweils ein Wasserstoffatom oder eine Alkylgruppe darstellen, mit zumindest einer Polyetherverbindung der allgemeinen Formel (2)

OH-R⁴-R⁵ (2),

bei welcher R⁴ eine Kette der Form

-R^{4,1}-O-R^{4,2}-O-R^{4,3}-O-...-R^{4,i}-O-...-R^{4,m}-O-

mit m ≥ 10 ist, wobei jede der Untereinheiten -R^{4,i}-O- mit i = 1...m eine Struktur 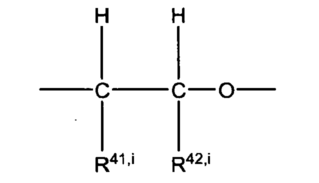 aufweist, wobei R^{41,i} und/oder R^{42,i} jeweils ein Wasserstoffatom, eine Alkyl-, eine Aryl-, eine Alkylaryl- oder eine Alkenylgruppe darstellen, und R⁵ eine Alkylgruppe darstellt, in Gegenwart zumindest eines Katalysators umgesetzt wird, wobei zumindest ein Polyether(alkyl)-acrylat der allgemeinen Formel 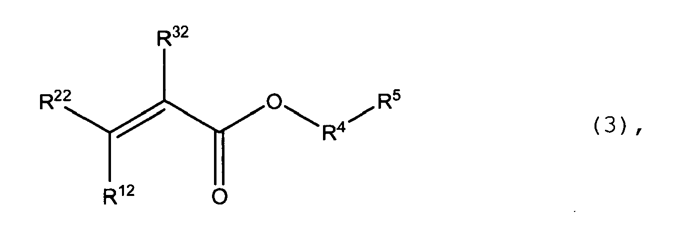 bei dem R¹² = R¹ oder R¹¹, R²² = R² oder R²¹ und R³² = R³ oder R³¹ ist, als Bestandteil des Stoffgemisches entsteht, wobei als Katalysator zumindest eine neutrale Verbindung der Formel

MLₓ (7)

verwendet wird, bei der das Zentralatom M ein Metall der 3. oder 4. Hauptgruppe oder der 3. - 8. Nebengruppe ist und L für einen Liganden steht, der aus einer Gruppe ausgewählt wird, die Halogenide, Wasserstoff, Chelatliganden und Liganden enthält, die über ein C-Atom oder über ein O-, ein P-, ein S- oder ein N-Atom direkt an das Zentralatom M binden, wobei die Liganden L entweder gleich oder voneinander verschieden sein können und wobei x ≥ 2 und ≤ 6 ist.

Hier soll sich die Verwendung von (Alkyl)acrylat sowohl auf ein mit einem Alkylrest substituiertes Acrylat als auch auf ein unsubstituiertes Acrylat, d.h. ein Acrylsäureester, beziehen.

Im Rahmen von Untersuchungen zur Umsetzung von ungesättigten Carbonsäureanhydriden mit Polyethern bzw. Polyethermonoalkylethern wurde überraschenderweise festgestellt, daß bei Verwendung einer Verbindung (7) als Katalysator sehr selektiv lagerbeständige Polyether(alkyl)acrylate hergestellt werden können. Auf diese Weise können auch bei der Verwendung geringer Katalysatormengen sehr hohe, nahezu vollständige Umsatzgrade - bezogen auf die Edukt-Verbindung Polyether - erzielt werden.

Aufgrund der hohen Selektivität der Reaktion laufen bei dem erfindungsgemäßen Verfahren fast keine Nebenreaktionen ab, was dazu beiträgt, daß der Anteil unerwünschter Nebenprodukte, wie beispielsweise Polyetherdi(alkyl)acrylate, im Unterschied zu bekannten Verfahren zur Herstellung von Polyether(alkyl)acrylaten, vorteilhafterweise sehr gering ist (siehe Beispiel 3). Dieses spiegelt sich u.a. in einer engen Molmassenverteilung wieder. Bei der Verwendung eines Katalysators der Formel (7) findet überraschenderweise nahezu keine Reaktion zwischen den bei der Reaktion entstehenden Polyether(alkyl)acrylat-Monomeren statt (siehe Beispiel 3 und Beispiel 8). Es wird davon ausgegangen, daß unter anderem diese Reaktionsprodukte der Reaktion der Polyether(alkyl)acrylatMonomere untereinander für die bekannte Gelbildung bei der Herstellung bzw. der Lagerung derartiger Stoffgemische verantwortlich sind. Da diese Reaktionen erfindungsgemäß jedoch nicht oder nur im nicht nachweisbaren Maßstabe ablaufen, hat das erfindungsgemäße Verfahren den Vorteil, daß das hergestellte Stoffgemisch nicht sofort nach seiner Herstellung weiterverarbeitet werden muß. Das Stoffgemisch kann somit auf Vorrat hergestellt werden, und die Notwendigkeit einer Herstellung bei Bedarf entfällt.

Untersuchungen bezüglich des Mechanismus der Reaktion haben ergeben, daß dieser vermutlich wie folgt abläuft.

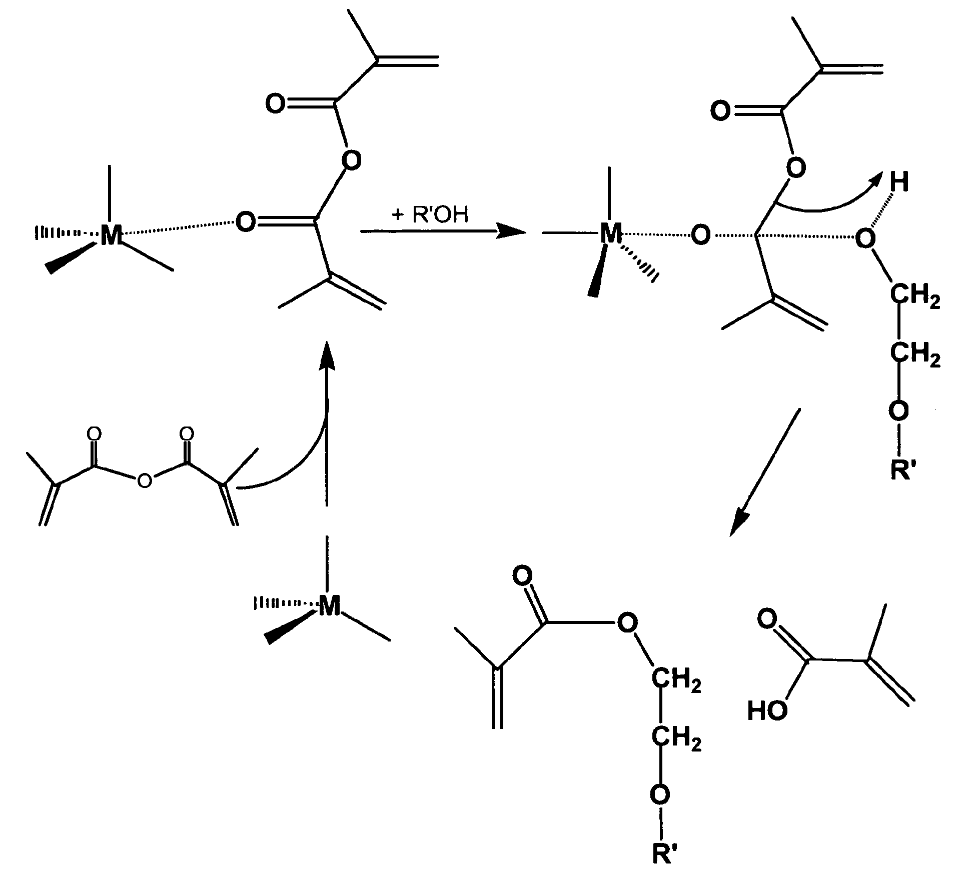

Das Carbonylsauerstoffatom des Carbonsäureanhydrides bildet eine koordinative Bindung zum Zentralatom des Katalysators aus. Dabei findet eine räumliche Verschiebung der Liganden statt. Die Ladungsdichte am Zentralatom wird erhöht. Gleichzeitig wird die Abnahme der Ladungsdichte am Carbonylsauerstoffatom durch das Carbonylkohlenstoffatom ausgeglichen. Die Folge ist eine weitere Polarisierung der Carbonylbindung.

Anschließend erfolgt eine Anlagerung des Polyethers. Der Sauerstoff der Hydroxylfunktion lagert sich unter Ausbildung einer koordinativen Bindung an das positivierte Carbonylkohlenstoffatom an. Die koordinative Bindung wandelt sich anschließend in eine kovalente Bindung um und gleichzeitig erfolgt die Auflösung der koordinativen Bindung zwischen dem Carbonylsauerstoffatom des Carbonsäureanhydrides und dem Zentralatom des Katalysators. Nun wandert das Wasserstoff-Proton der Hydroxonium-Zwischenstufe zum Carboxylat-Rest. Dieser spaltet ab und bildet eine freie Carbonsäure.

Der vermutete Mechanismus legt nahe, daß M ausreichend groß sein muss, um Platz für die Ausbildung einer zusätzlichen koordinativen Bindung zu haben. Auch muss die Bindung zwischen dem Zentralatom und den Liganden ausreichend polarisiert sein, so daß die Sauerstoff-Affinität von M ausreichend hoch ist.

Bei dem erfindungsgemäßen Verfahren wird wenigstens eine neutrale Verbindung (7) als Katalysator verwendet. Die Verbindung der Formel (7) weist als Zentralatom ein Metall der 3. oder 4. Hauptgruppe oder der 3. - 8. Nebengruppe des Periodensystems der Elemente und 2 bis 6 Liganden L auf, wobei L für einen Liganden steht, der aus einer Gruppe ausgewählt wird, die Halogenide, Wasserstoff, Chelatliganden und Liganden enthält, die über ein C-Atom oder über ein O-, ein P-, ein S- oder ein N-Atom direkt an das Zentralatom M binden, wobei die Liganden L entweder gleich oder voneinander verschieden sein können.

Bei der Wahl der Liganden der Verbindung (7) ist man nicht darauf beschränkt, lediglich einen Liganden L in einer für M geeigneten Anzahl zu verwenden. In Abhängigkeit von den chemischen Eigenschaften des Elements M können auch unterschiedliche Liganden in entsprechender Anzahl verwendet werden.

Bei dem Liganden L kann es sich um einen nichtchelatisierenden oder einen chelatisierenden Liganden handeln.

Weist die Verbindung (7) einen oder mehrere nichtchelatisierende Liganden auf, so ist es bevorzugt, daß es sich dabei um Alkyl-, Alkoxy-, Alkylcarboxy- und/oder Arylreste handelt. In einem solchen Fall ist es bevorzugt, daß es sich bei dem einen oder den Liganden um C₁-C₂₂-Alkyl-, C₁-C₂₂-Alkoxy-, C₁-C₂₂-Alkylcarboxy- oder C₆-C₂₂-Aryl-Reste handelt. Vorzugsweise handelt es sich um C₁-C₈-Alkyl-, C₁-C₈-Alkoxy-, C₁-C₈-Alkylcarboxy- oder C₆-C₈-Aryl-Reste.

Die Liganden sind jedoch nicht auf solche beschränkt, die mit einem C- oder einem O-Atom an das Zentralatom binden. Es ist auch möglich, daß die Liganden über ein anderes Heteroatom als Sauerstoff an das Zentralatom binden. So ist es denkbar, als Liganden Phosphane wie beispielsweise Triphenylphosphan oder Amine zu verwenden.

Wenn die Verbindung (7) einen chelatisierenden Liganden aufweist, so können die zumindest zwei an das Zentralatom bindenden Atome des Chelatliganden gleich sein, es ist jedoch auch möglich, daß es sich bei den an das Zentralatom bindenden Atomen um unterschiedliche Atome handelt. Ein Beispiel für einen Chelatliganden, bei dem die an das Zentralatom bindenden Atome gleich sind, ist Acetylacetonat.

Natürlich ist es auch möglich, daß neben einem oder mehreren chelatisierenden Liganden zumindest ein weiterer, nichtchelatisierender Ligand an das Zentralatom M gebunden ist.

Bei dem erfindungsgemäßen Verfahren ist es bevorzugt, daß es sich bei dem Zentralatom um ein Metall der 3. oder 4. Hauptgruppe oder der 4. oder 8. Nebengruppe des Periodensystems handelt.

Beispiele geeigneter Verbindungsklassen, die erfindungsgemäß als Katalysator verwendet werden können, sind Metallhalogenide, Metallsäureester, Metallorganyle, Organometallalkoxide, Organometallhalogenide, Organometallhydride, Organometallcarboxylate, Organometallamide, Organometallsulfinate und Metallkomplexe vom Typ Metallocen.

Beispiele von geeigneten Verbindungen (7) mit einem Zentralatom der 3. Hauptgruppe sind Aluminiumchlorid, Triethylaluminium, Triisobutylaluminium, Diethylaluminiumchlorid, Diethylaluminiumhydrid, Diethoxy(methyl)aluminium, Ethoxy(dimethyl)aluminium, Triethoxyaluminium, Aluminium-tri(ethylacetoacetonat), Trimethylgallium und Triethoxyindium.

Beispiele geeigneter Verbindungen (7) mit einem Metall der 4. Hauptgruppe des Periodensystems umfassen Tetramethylgermanium, Triethylzinnethoxid, Zinn (II) octoat, Zinn(II)ethylhexanoat, Zinn(II)laurat, Dibutylzinnoxid, Dibutylzinndichlorid, Dibutylzinndiacetat, Dibutylzinndilaurat, Dibutylzinnmaleat, Dioctylzinndiacetat, Zinn(II)-2-ethylcaproat, Zinn(II)ethylhexanoat, Triethylzinndimethylamid, Cyclopentadienyltrimethylzinn, Bis(cyclopentadienyl)zinn, Tetraethylblei, Triethylbleichlorid, Trimethylbleihydroxid, Triphenlybleimethylat und Trimethylbleihydrid.

Ein Beispiel für eine Verbindung (7) mit einem Zentralatom der 3. Nebengruppe ist Scandiumchlorid.

Beispiele geeigneter Verbindungen (7) mit einem Metall der 4. Nebengruppe des Periodensystems der Elemente umfassen Titantetrachlorid, Tetraethylorthotitanat, Tetraisopropyltitanat, Tetrabutyltitanat, Chlortriisopropylorthotitanat, Tetra(phenylmethylen)titan, Bis(cyclopentadienyl)titandichlorid und Titanylacetylacetonat.

Beispiele geeigneter Verbindungen (7) mit einem Metall der 5. Nebengruppe des Periodensystems der Elemente umfassen Vanadiumpentafluorid und Niobiumtetrachlorid.

Beispiele geeigneter Verbindungen (7) mit einem Metall der 6. Nebengruppe des Periodensystems der Elemente umfassen Chromtrichlorid, Triphenylchrom, Molybdänpentachlorid und Molybdänglykolat

Beispiele geeigneter Verbindungen (7) mit einem Metall der 7. Nebengruppe des Periodensystems der Elemente umfassen Mangandichlorid und Rheniumtribromid,

Beispiele geeigneter Verbindungen (7) mit einem Metall der 8. Nebengruppe des Periodensystems der Elemente umfassen Eisentrichlorid, Eisentribromid, Eisen(III)octoat, Eisen(III)acetylacetonat, Ferrocene, Eisen(III)citrat, Eisen(II)gluconat, Cobaltdichlorid, Cobalt(II)acetat, Cobalt(II)acetylacetonat, Cobalt(III)acetylacetonat, Nickel(II)bromid, Nickel(II)acetylacetonat, Bis(triphenylphosphin)palladium(II)dichlorid, Platin(IV)chlorid, Trimethylplatiniodid, Tetramethylplatin.

Bei den Resten R¹, R², R³, R¹¹, R²¹ und R³¹ des Carbonsäureanhydrides handelt es sich jeweils um ein Wasserstoffatom oder eine Alkylgruppe. Die Reste R¹, R², R³, R¹¹, R²¹ und R³¹ können voneinander verschieden oder gleich sein. Es ist denkbar, "reine" Anhydride, d.h. Anhydride, bei denen R¹ = R¹¹, R² = R²¹ und R³ = R³¹ ist, oder gemischte Anhydride einzusetzen, d.h. Anhydride, bei denen R¹ ungleich R¹¹, R² ungleich R²¹ und R³ ungleich R³¹ ist. Vorzugsweise werden bei dem erfindungsgemäßen Verfahren jedoch reine Carbonsäureanhydride eingesetzt. Die Reste R¹, R², R³, R¹¹, R²¹ und R³¹ stellen vorzugsweise C₁-C₈-Alkylgruppen dar. Besonders bevorzugt ist die Verwendung von Carbonsäureanhydriden, bei denen die Reste R¹, R², R³, R¹¹, R²¹ und R³¹ jeweils eine Methylgruppe oder ein Wasserstoffatom darstellen. Bevorzugt sind somit beispielsweise 2-Propensäureanhydrid oder 2-Methylpropensäureanhydrid.

Vorteilhafterweise kann neben der Polyetherverbindung mit der allgemeinen Formel (2) zumindest eine weitere Polyether-verbindung mit der allgemeinen Formel

OH-R⁶-R⁷ (4),

bei welcher R⁶ eine Kette der Form

-R^{6,1}-O-R^{6,2}-O-R^{6,3}-O-...-R^{6,j}-O-...-R^{6,o}-O-

mit o ≥ 5 ist, wobei jede der Untereinheiten -R^{6,j}-O- mit j = 1...o eine Struktur 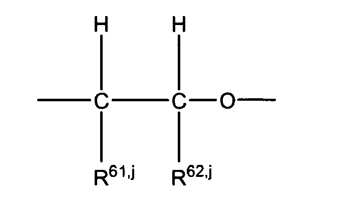 aufweist, wobei R^{61,j} und/oder R^{62,j} jeweils ein Wasserstoffatom, eine Alkyl-, eine Aryl-, eine Alkylaryl- oder eine Alkenylgruppe darstellen, und R⁷ eine Alkylgruppe darstellt, mit dem zumindest einen Carbonsäureanhydrid der allgemeinen Formel (1) umgesetzt wird, wobei zumindest ein weiteres Polyether(alkyl)acrylat der allgemeinen Formel 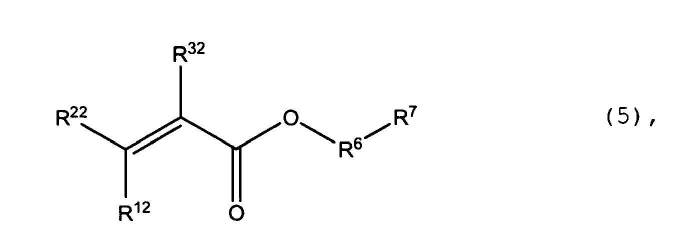 bei dem R¹² = R¹ oder R¹¹, R²² = R² oder R²¹ und R³² = R³ oder R³¹ ist, als Bestandteil des Stoffgemisches entsteht. Die oben genannten Vorteile des erfindungsgemäßen Verfahrens, nämlich das Erreichen eines hohen Umsetzungsgrades und die Lagerbeständigkeit des entstehenden Stoffgemischs, werden durch die Verwendung einer zweiten Polyetherverbindung nicht nachteilig beeinflußt. Die Verwendung einer zweiten Polyetherverbindung hat den Vorteil, daß in dem Stoffgemisch zwei unterschiedliche Polyether(alkyl)acrylate vorliegen. Man kann somit die Zusammensetzung des Stoffgemischs beeinflussen, so daß man bereits bei der Herstellung des Stoffgemisches die Eigenschaft eines Polymers, das bei der späteren Umsetzung des Stoffgemisches entsteht, steuern kann. Auch bei Verwendung einer zweiten Polyetherverbindung treten keine nennenswerten Nebenreaktionen auf, und die Umsetzung bleibt hoch selektiv.

Gemäß der vorliegenden Erfindung wird bei der Herstellung des Stoffgemisches zumindest eine Polyetherverbindung der allgemeinen Formel(2)

OH-R⁴-R⁵ (2),

bei welcher R⁴ eine Kette der Form

-R^{4,1}-O-R^{4,2}-O-R^{4,3}-O-...-R^{4,i}-O-...-R^{4,m}-O-

mit m ≥ 10 ist, verwendet.

Jede der Untereinheiten -R^{4,i}-O- mit i = 1...m weist folgende Struktur auf:

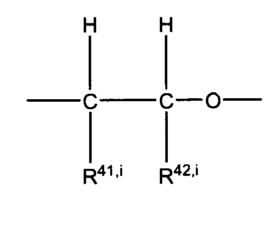

Die Reste R^{41,i} und/oder R^{42,i} stellen jeweils ein Wasserstoffatom, eine Alkyl-, eine Aryl-, eine Alkylaryl- oder eine Alkenylgruppe dar. Das erfindungsgemäße Verfahren ist nicht darauf beschränkt, als Edukte lediglich solche Polyetherverbindungen zu verwenden, deren sämtliche Untereinheiten identisch sind. Es ist vielmehr möglich, auch solche Polyetherverbindungen als Edukte zu verwenden, bei denen die Kette R⁴ aus mehreren verschiedenen Untereinheiten aufgebaut ist. So ist es möglich, Ketten R⁴ zu verwenden, die einen Block-Copolymer, einen alternierenden oder statistischen Copolymer darstellen. Es ist erfindungsgemäß also möglich, eine Kette R⁴ zu verwenden, die einen Copolymer aus beispielsweise Ethylen- und Propyleneinheiten darstellt - natürlich jeweils verbunden über eine Etherbrücke. Man ist jedoch nicht auf einen Dicopolymer beschränkt, es ist auch denkbar, daß in der Kette drei oder mehr unterschiedliche Untereinheiten miteinander verknüpft sind. Natürlich ist es aber auch möglich, eine Kette R⁴ zu verwenden, bei der sämtliche Untereinheiten gleich sind. Aufgrund der Wahlmöglichkeit, die das erfindungsgemäße Verfahren für die Polyetherverbindungen eröffnet, ist es möglich, Stoffgemische mit an die jeweilige Situation angepassten Eigenschaften herzustellen.

Wird bei dem erfindungsgemäßen Verfahren eine zweite Polyetherverbindung der allgemeinen Formel (4) verwendet, so gilt oben gesagtes natürlich auch für die Kette R⁶. In einem solchen Fall kann man die beiden Ketten unabhängig von einander wählen, d.h. eine Kette kann beispielsweise einen alternierenden Copolymer darstellen, während die andere Kette z.b. einen Block-Copolymer darstellt.

Es ist bevorzugt, die Reste R^{41,i} und/oder R^{42,i} bzw. die Reste R^{61,j} und/oder R^{62,j} so zu wählen, daß es sich bei diesen jeweils um ein Wasserstoffatom, eine Alkyl-, eine C₆-C₂₀-Aryl-, eine C₇-C₂₀-Alkylaryl- oder eine C₁-C₂₀-Alkenylgruppe handelt. Besonders bevorzugt ist es, die Reste R^{41,i} und/oder R^{42,i} bzw. die Reste R^{61,j} und/oder R^{62,j} so zu wählen, daß es sich bei diesen jeweils um ein Wasserstoffatom oder eine Alkylgruppe, insbesondere um eine C₁-C₂₀-Alkylgruppe, handelt.

Gemäß der vorliegenden Erfindung liegt der Wert m der Polyetherverbindung der allgemeinen Formel (2) in dem Bereich von 10 bis 140 und vorzugsweise in dem Bereich von 20 bis 110. Bei Verwendung einer zweiten Polyetherverbindung der allgemeinen Formel (4) liegt der Wert o in dem Bereich von 5 bis 80 und vorzugsweise in dem Bereich von 10 bis 35. Vorzugsweise werden die Werte für m und o so gewählt, daß die Formel o ≤ m-5 erfüllt ist.

Bei dem Rest R⁵ bzw. den Resten R⁵ und R⁷ kann es sich um unverzweigte oder verzweigte C₁-C₂₀-Alkylreste handeln. Vorzugsweise werden R⁵ bzw. R⁵ und R⁷ so gewählt, daß es sich um unverzweigte C₁-C₈-Alkylreste handelt. Bevorzugt sind demnach für den Rest R⁵ bzw. die Rest R⁵ und R⁷ Methyl-, Ethyl-, Propyl-, Butyl-, Pentyl-, Hexyl-, Heptyl- und Oktyl-Reste. Bei Verwendung von zumindest zwei Polyetherverbindungen können die Reste R⁵ und R⁷ gleich oder verschieden sein. Es ist jedoch bevorzugt, die beiden Reste so zu wählen, daß der Rest R⁵ von dem Rest R⁷ verschieden ist.

Bei dem erfindungsgemäßen Verfahren wird die Verbindung der allgemeinen Formel (7) in einer Menge von 0,001 - 5,0 Mol-%, vorzugsweise in einer Menge von 0,1 - 2,0 Mol-%, bezogen auf die Summe der Stoffmengen der Polyetherverbindungen zugegeben. Wird eine Kombination aus mehreren Verbindungen der allgemeinen Formel (7) verwendet, beziehen sich die obigen Werte auf die Summe der Stoffmengen der Verbindungen der Formel (7). Werden mehrere Verbindungen der Formel (7) verwendet, kann der Anteil einer der Verbindungen bis zu 95 % der Gesamtmenge betragen. Insbesondere dann, wenn neben einer Polyether-verbindung mit der allgemeinen Formel (2) eine weitere Polyetherverbindung mit der allgemeinen Formel (4) verwendet wird, kann es sinnvoll sein, ein Gemisch von mehreren Verbindungen (7) als Katalysatorengemisch zu verwenden. Vorzugsweise wird dabei die Verteilung der Stoffmengen in dem Katalysatorengemisch an die Stoffmengenverteilung der Polyetherverbindungen angepaßt. Da verschiedene Katalysatoren bei unterschiedlichen Edukten andere Effizienzen bei der Katalyse zeigen können, kann man so die Gesamteffizienz der Reaktion optimal steuern und dadurch die Reaktionszeit gegenüber nicht an die Stoffmengen der Polyetherverbindungen angepaßter Katalysatorengemische verkürzen.

Bei dem erfindungsgemäßen Verfahren wird die zumindest eine Polyetherverbindung (2) mit dem Carbonsäureanhydrid (1) über eine Reaktionszeit von 1 bis 8 Stunden, vorzugsweise von 2 bis 6 Stunden, umgesetzt. Bei der Verwendung von Verbindungen (7) als Katalysator hat sich erstaunlicherweise gezeigt, daß bei Verwendung lediglich einer Polyetherverbindung der allgemeinen Formel (2) mit einem Wert von m kleiner als 45 bereits eine Reaktionszeit von 2 Stunden ausreichen kann, um einen Umsatz von nahezu 100 % zu erreichen.

Die zumindest eine Polyetherverbindung (2) wird mit dem Carbonsäureanhydrid (1) bei einer Reaktionstemperatur von 20° bis 140°, vorzugsweise von 40° bis 110°, umgesetzt.

Die Erfindung betrifft ferner ein Stoffgemisch, welches zumindest ein Polyether(alkyl)acrylat enthält und durch das zuvor erwähnte Verfahren erhältlich ist. Bei den Verfahren gemäß dem Stand der Technik zum Herstellen eines Stoffgemisches mit zumindest einem Polyether(alkyl)acrylat weist dieses Stoffgemisch unter anderem, wie bereits oben kurz erwähnt, Verbindungen auf, welche durch die Reaktion von Polyether(alkyl)acrylat-Monomeren untereinander entstehen. So entsteht beispielsweise bei der Umsetzung von Methacrylsäure mit einem Polyether bei Verwendung von konzentrierter Schwefelsäure als Katalysator ein großer Anteil des Dimers der Polyether(alkyl)acrylat-Monomere. Wie Beispiel 3 zeigt, kann dieser Anteil bei mehr als 10 Gew-% bezogen auf das Edukt Polyether liegen.

Andere aus dem Stand der Technik bekannte Stoffgemische weisen unter anderem nicht zu vernachlässigende Anteile an Polyetherdi(alkyl)acrylat-Verbindungen auf. Bei der Analyse eines handelsüblichen Methoxypolyethylenglykol-4000-methacrylats wurde der Anteil des Dimethacrylats mit 5 - 7 % bestimmt. Das analysierte Methoxypolyethylenglykol-4000-methacrylat wurde nach Herstellerangaben durch die Umsetzung von Methacrylsäure mit Methoxypolyethylenglyko14000 in Gegenwart von p-Toluolsulfonsäure als Katalysator hergestellt.

Der hohe Anteil von unerwünschten Nebenprodukten bei gemäß dem Stand der Technik hergestellten Stoffgemischen wirkt sich unter anderem nachteilig auf die Lagerfähigkeit solcher Stoffgemische aus. Eine solche ist im Extremfall nicht gegeben und das Stoffgemisch muss sofort nach seiner Herstellung umgesetzt werden. So ist es beispielsweise nicht möglich, eine Monomerlösung, welche durch Umsetzung von Methacrylsäureanhydrid mit Laurylpolyethylenglyko12000 bei Verwendung von Triethylamin als Katalysator erhalten wird, länger als einen Tag zu lagern, ohne daß sich ihre chemischen Eigenschaften verändern (siehe dazu Beispiel 7). Der hohe Anteil an Nebenprodukten hat ferner Auswirkungen auf das Reaktionsverhalten der Polyether(alkyl)acrylate. So ist es beispielsweise nicht möglich, das oben erwähnte handelsübliche Methoxypolyethylenglykol-4000-methacrylat gemäß einem weiter unten beschriebenen Verfahren zu einem Dispergiermittel zu copolymerisieren, da der Ansatz bei der Zugabe eines Monomeren/Inititor-Gemisches geliert (siehe dazu Beispiel 14).

Es wurde überraschenderweise gefunden, daß das durch das Verfahren erhältlich Stoffgemisch keine nachweisbaren Mengen eines Reaktionsprodukts einer Umsetzung von Polyether(alkyl)acrylat-Monomeren untereinander aufweist. Bei geeigneter Wahl der Reste R⁵ bzw. R⁵ und R⁷, wenn R⁵ bzw. R⁵ und R⁷ nicht Wasserstoff darstellen, weist das Stoffgemische auch keine Polyetherdi(alkyl)acrylat-Verbindungen auf (siehe dazu Beispiel 3). Ein derartiges Stoffgemisch ist im Unterschied zu den gemäß dem Stand der Technik herstellbaren Stoffgemischen für lange Zeit lagerstabil und es tritt bei der Herstellung dieses Stoffgemisches oder bei der Lagerung keine Gelbildung, d.h. eine Polymerisation der in dem Gemisch vorliegenden Monomere, auf. Soll ein Stoffgemisch mit wenigstens einem Polyether(alkyl)acrylat beispielsweise als Edukt für eine Polymerisationsreaktion verwendet werden, so ist es vorteilhafterweise nicht mehr notwendig, dieses Edukt erst kurz vor der Polymerisation das Stoffgemisch herzustellen, weil das Edukt lagerbeständig ist. Dadurch läßt sich der Zeitaufwand bei der Polymerisation verringern.

Die vorliegende Erfindung betrifft ferner eine Verwendung eines erfindungsgemäßen Stoffgemisches zur Herstellung eines Dispergiermittels für Alkali- und Erdalkali-Ionen enthaltende anorganische Stoffe bzw. Stoffgemische.

Wird das erfindungsgemäße Stoffgemisch copolymerisiert, erhält man ein Copolymer, welches als Dispergiermittel für wäßrige Zementsuspensionen verwendet werden kann. Bei Zusatz des Dispergiermittels zu einer wäßrigen Zementsuspension wird die Fließfähigkeit bzw. das Fließvermögen dieser Suspension gesteigert. Überraschenderweise hat sich gezeigt, daß bei Verwendung des erfindungsgemäßen Stoffgemisches zur Herstellung eines Dispergiermittels eine Verlängerung bzw. Steigerung der Fließfähigkeit der wäßrigen Zementsuspension gegenüber solchen Dispergiermitteln erzielt werden kann, die mit Polyether(alkyl)acrylaten gemäß dem Stand der Technik hergestellten werden. Ein weiterer Vorteil der Verwendung des erfindungsgemäßen Stoffgemisches ist es, daß trotz langanhaltender verflüssigender Wirkung des Dispergiermittels höhere Frühfestigkeiten bei mit erfindungsgemäßen Dispergiermitteln versetzten Zementmischungen erreicht werden (siehe dazu Tabelle 1). Die Zusammensetzung des erfindungsgemäße Stoffgemisches hat demnach positive Auswirkungen auf die Eigenschaften des mit dem Stoffgemisch erhältlichen Copolymers.

Bei der Herstellung des Dispergiermittels kann das Stoffgemisch vor bzw. bei der Polymerisation mit einer Polyether(2-methyl)-2-propensäure-Verbindung der allgemeinen Formel 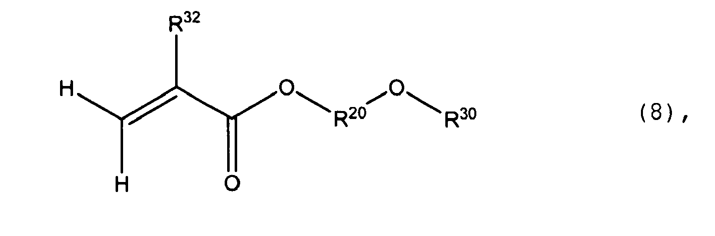 bei der R²⁰ R⁴ oder R⁶ und R³⁰ R⁵ oder R⁷ entspricht und p eine ganze Zahl größer als 5 ist, versetzt werden.

Gegenüber einem solchen Zusatz einer weiteren Polyether-verbindung ist es jedoch bevorzugt, diese bei der Herstellung des Stoffgemisches selbst herzustellen. Durch diese Möglichkeit ergibt sich der Vorteil, daß man die Eigenschaften des Dispergiermittels in Bezug auf die Steigerung des Fließvermögens bzw. der Fließfähigkeit durch die Anzahl und Art der verwendeten Edukte steuern kann. Wird lediglich ein Polyether der allgemeinen Formel (2) bei der Herstellung des Stoffgemisches verwendet, so wird bei der Umsetzung des Stoffgemisches ein Dispergiermittel erhalten, dessen verflüssigende Wirkung für eine Zeit von etwa 60 Minuten nahezu konstant ist. Wird bei der Herstellung des Stoffgemisches wenigstens eine Polyether-verbindung der allgemeinen Formel (4) verwendet, so erhält man bei Umsetzung des Stoffgemisches ein Dispergiermittel, dessen verflüssigende Wirkung gegenüber dem zuvor genannten Dispergiermittel deutlich länger anhält (siehe dazu Tabelle 2). Es ist also bereits bei der Herstellung des Stoffgemisches möglich, den Zeitraum einzustellen, in welchem das durch Umsetzung des Stoffgemisches erhältliche Dispergiermittel eine verflüssigende Wirkung hat. Insbesondere Dispergiermittel mit langhaltender verflüssigender Wirkung werden aufgrund der größer werdenden Nachfrage nach sogenanntem Transportbeton immer wichtiger, da die Transportzeiten teilweise erheblich sind und dann eine lang anhaltende verflüssigende Wirkung notwendig ist.

Bei der Herstellung eines Dispergiermittels können dem Stoffgemisch eine oder mehrere Monomer-Verbindungen mit den allgemeinen Formeln 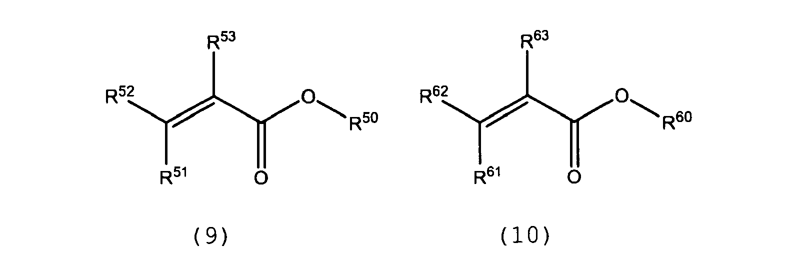 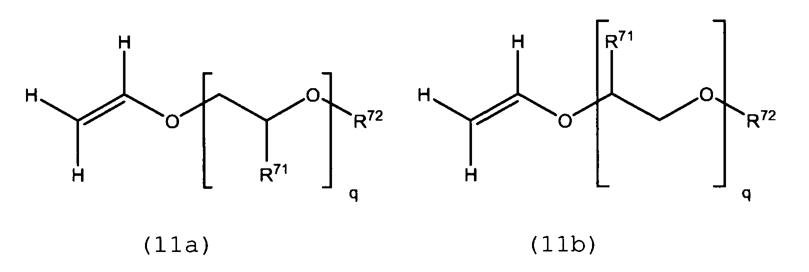 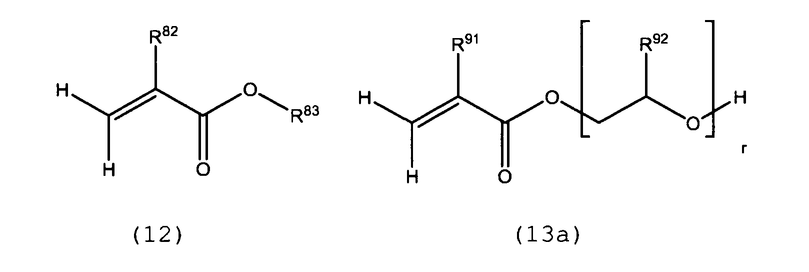 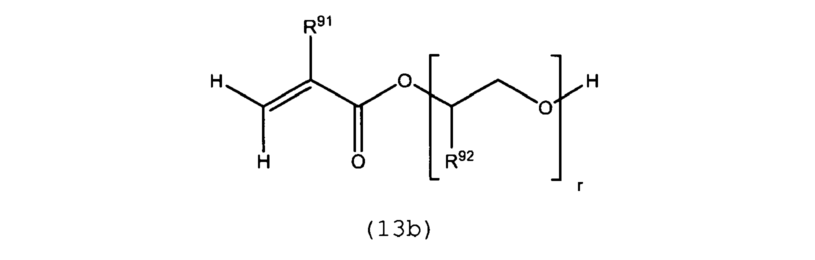 zugefügt werden, wobei die Reste R⁵¹, R⁵², R⁵³, R⁷¹, R⁸², R⁹¹ und R⁹² jeweils entweder ein Wasserstoffatom oder eine CH₃-Gruppe, die Reste R⁶¹, R⁶² und R⁶³ jeweils entweder ein Wasserstoffatom, eine CH₃-Gruppe, eine CH₂COOH-Gruppe oder eine COOH-Gruppe, die Reste R⁵⁰ und R⁶⁰ jeweils entweder ein Wasserstoffatom, ein Alkali- oder Erdalkaliion, ein Alkylamin oder ein Oxioalkylamin, der Rest R⁷² ein Wasserstoffatom oder eine C₁-C₂₀-Alkylgruppe und der Rest R⁸³ eine C₁-C₂₀-Alkylgruppe, eine Hydroxylalkylgruppe, eine Sulfoalkylgruppe, eine Sulfonsäuregruppe oder eine quartärnere Amminogruppe darstellen, und wobei q eine ganze zahl ≥ 5 und ≤ 140 und r eine ganze zahl ≥ 1 und ≤ 10 darstellt.

Der Anteil der Verbindung (9), bezogen auf das Stoffgemisch, kann dabei bis zu 80 Gew.-% und die Anteile der Verbindungen (10) und (12) und die Summe der Verbindungen (13a) und (13b) bis 50 Gew.-% betragen.

Es ist bevorzugt, daß man dem Stoffgemisch vor dem Polymerisieren 1 - 85 Gew-% einer Stoffmischung der Stoffe (11a) und (11b), und bevorzugt 50 - 80 Gew-% einer Stoffmischung der Stoffe (11a) und (11b) mit q ≥ 20 und ≤ 140, zumischt.

Das Dispergiermittel weist ein mittleres Molekulargewicht Mₙ zwischen 3000 und 750000 Dalton und vorzugsweise zwischen 5000 und 50000 Dalton auf. Die molekulare Uneinheitlichkeit des Dispergiermittels liegt bei 2 - 18 und bevorzugt bei 3 - 12.

Es ist bevorzugt, daß das Stoffgemisch 50 - 95 Gew.-% der Verbindung der allgemeinen Formel (3) enthält und, sofern das Stoffgemisch eine Verbindung der allgemeinen Formel (5) aufweist, zusätzlich zu den 50 - 95 Gew.-% der Verbindung der allgemeinen Formel (3) 5 - 50 Gew.-% der Verbindung der allgemeinen Formel (5).

### Verfahren zum Herstellen des Stoffgemisches

Das erfindungsgemäße Verfahren zum Herstellen des Stoffgemisches wird üblicherweise ohne Lösungsmittel durchgeführt, obgleich es auch möglich ist, als Lösungsmittel beispielsweise Toluol, Xylol, Cyclohexan, N-Methylpyrrolidon, Tetrahydrofuran, Dioxan, Glutarsäuremethylester, Propylencarbonat, Propylenglykol-n-butylether oder Butyldiglykolacetat zu verwenden. In einem geeigneten Reaktionsgefäß werden das Carbonsäureanhydrid, die wenigstens eine Polyether-Verbindung, ein Inihibitor und der Katalysator bzw. das Katalysatorengemisch vorgelegt. In Abhängigkeit von der Empfindlichkeit des Katalysators bzw. des Katalysatorengemisches gegenüber Sauerstoff und Luftfeuchtigkeit kann das Verfahren unter inerten Bedingungen durchgeführt werden, d.h. unter einem Schutzgas wie beispielsweise Stickstoff und mit inerten Edukten und ggf. Lösungsmitteln. In Abhängigkeit der verwendeten Edukte und des ggf. verwendeten Lösungsmittels wird das Reaktionsgemisch bei einer Temperatur von 20° bis 140° unter Rühren umgesetzt. Nach einer Stunde wird der Umsatz über die Bestimmung der Säurezahl ermittelt. Liegt der Umsatz nicht über 98 % bezogen auf die Summe der Stoffmengen der Polyether-Verbindungen, so wird bei gleich bleibender Temperatur weitergerührt, bis die Reaktion beendet ist, was anhand des Umsatzes ermittelt wird. Sobald die Reaktion beendet ist, wird der Ansatz mit Wasser verdünnt und auf 50 % Festkörper eingestellt. Eine so hergestellte Monomerlösung ist über 6 Monate lagerstabil.

### Verwendung des Stoffgemisches zur Herstellung eines Dispergiermittels

Die Umsetzung des nach dem erfindungsgemäßen Verfahren hergestellten Stoffgemisches kann nach aus dem Stand der Technik bekannten Verfahren durchgeführt werden. Dabei kann das Stoffgemisch alleine oder mit weiteren copolymerisierbaren Monomeren umgesetzt werden. Die Umsetzung kann unter Verwendung eines Lösungsmittels oder in Substanz durchgeführt werden. Bei einer bevorzugten Verfahrensweise wird die Polymerisation in wäßriger Lösung bei einer Temperatur unterhalb des Trübungspunktes der Lösung durchgeführt. Es kann eine batchweise Verfahrensweise mit einer diskontinuierlichen Dosierung der Reaktionspartner oder eine kontinuierliche Verfahrensweise eingesetzt werden. Die Wahl des Initiatorsystems unterliegt keinen Beschränkungen. Es kann sich um Peroxide, Diazoverbindungen, Redoxsysteme etc. handeln. Beispielsweise sind Wasserstoffperoxid, Ammoniumperoxodisulfat, Alkalisalze des Peroxodisulfats, AMBN, AIBN usw. geeignet. Es ist empfehlenswert, eine Substanz, die als Kettenübertragungsreagenz fungieren kann, zu verwenden. Hierbei kann es sich um schwefelhaltige Verbindungen wie beispielsweise Dodecylmerkaptan, Merkaptopropionsäure, Merkaptoethanol usw. handeln. Diese kann dem Reaktionsgemisch direkt zugesetzt werden, bei Anwendung eines Dosierverfahrens dem Gemisch der Monomere beigefügt werden oder unabhängig von Initiator und Monomergemisch in einer eigenen Dosierung der Reaktionslösung zugeführt werden. Ferner ist es möglich, die Monomere einzeln und somit getrennt voneinander dem Polymerisationsreaktor zuzuführen, es ist jedoch auch möglich, die verschiedenen Monomere vor dem eigentlichen Einleiten in den Polymerisationsreaktor zu mischen. Bei der Reaktion selber beträgt die Reaktionstemperatur 20 - 100°C, vorzugsweise 40 - 90°C und die Reaktionszeit beträgt bis zu 8 Stunden, wobei es bevorzugt ist, daß die Reaktionszeit 1 - 4 Stunden beträgt.

Nach beendeter Polymerisationsreaktion wird das Reaktionsgemisch abgekühlt, neutralisiert und auf einen Feststoffgehalt von 20 % verdünnt

### Beispiele Polyether(alkyl)acrylate

### Beispiele gemäß dem erfindungsgemäßen Verfahren zum Herstellen des Stoffgemisches

### Beispiel 1: Methoxypolyethylenglyko12000methacrylat, MPEG2000MA

In einem 1 l Dreihalskolben werden bei 80°C 500 g Pluriol A2000E, 58 g 2-Methyl-propensäureanhydrid, 0,5 g MEHQ und 0,1 DBTA eine Stunde gerührt. Nach einer Stunde wurde der Umsatz über die Bestimmung der Säurezahl ermittelt. Der Umsatz lag bei ca. 90%. Nach einer weiteren Stunde Rühren bei 80° C lag der Umsatz bei ca. 100%. Durch Zugabe von Wasser wurde der Ansatz auf 50% Festkörper eingestellt. Die wäßrige Monomerlösung war über 6 Monate lagerstabil.

### Beispiel 2: Methoxypolyethylenglyko14000methacrylat, MPEG4000MA

In einem 1 l Dreihalskolben werden bei 80°C 500 g Pluriol A4000E und 28,9 g 2-Methyl-propensäureanhydrid, 0,5 g MEHQ und 0,15 g DBTA eine Stunde gerührt. Nach einer Stunde wurde der Umsatz über die Bestimmung der Säurezahl ermittelt. Der Umsatz lag bei ca. 85%. Nach weiteren drei Stunden Rühren bei 80°C lag der Umsatz bei ca. 100%. Durch Zugabe von Wasser wurde der Ansatz auf 50% Festkörper eingestellt. Der Diol-Anteil (Polyethylenglykoldimethacrylat) liegt bei < 1%. Die wäßrige Monomerlösung war über 6 Monate lagerstabil.

### Beispiel 3: Methoxypolyethylenglyko14000methacrylat, MPEG4000MA (Ausführung für Vergleich mit EP 1 247 824)

In einem 1 l Dreihalskolben wurden bei 100°C 300 g Pluriol A4000E, 18,2 g 2-Methyl-propensäureanhydrid, 0,16 g Hydrochinon und 0,25 g DBTA 4 Stunden gerührt. Nach 4 Stunden wurde der Umsatz über die Bestimmung der Säurezahl ermittelt. Der Umsatz lag bei ca. 100 %. Durch Zugabe von Wasser wurde der Ansatz auf 50 % Festkörper eingestellt. Die wäßrige Monomerlösung war über 6 Monate lagerstabil.

Mittels GPC war kein Anteil an dimerisiertem Methoxypolyethylenglyko14000methacrylat nachweisbar. Der Diol-Anteil (Polyethylenglykoldimethacrylat) liegt unter 1 %.

### Beispiel 4: Laurylpolyethylenglyko12000methacrylat, LPEG2000MA

In einem 1 l Dreihalskolben werden bei 90°C 500 g Laurylpolyethylenglykol2000, 58 g 2-Methyl-propensäureanhydrid, 0,5 g MEHQ und 1 g DBTL 4 Stunde gerührt. Nach 4 Stunden wurde der Umsatz über die Bestimmung der Säurezahl ermittelt. Der Umsatz lag bei ca. 100%. Durch Zugabe von Wasser wurde der Ansatz auf 50% Festkörper eingestellt. Die wäßrige Monomerlösung war über 6 Monate lagerstabil.

### Beispiel 5: Methoxypolyethylenglyko12000 / Methoxypolyethylenglyko1500methacrylat, MPEG2000MA / MPEG500MA

In einem 1 l Dreihalskolben werden bei 80°C 500 g Pluriol A2000E, 70 g Pluriol A500E, 92,5 g 2-Methyl-propensäureanhydrid, 0,5 g MEHQ und 0,1 g DBTA eine Stunde gerührt. Nach einer Stunde wurde der Umsatz über die Bestimmung der Säurezahl ermittelt. Der Umsatz lag bei ca. 90%. Nach einer weiteren Stunde Rühren bei 80°C lag der Umsatz bei ca. 100%. Durch Zugabe von Wasser wurde der Ansatz auf 50% Festkörper eingestellt. Die wäßrige Monomerlösung war über 6 Monate lagerstabil.

### Vergleichsbeispiele

### Beispiel 6: Methoxypolyethylenglyko12000methacrylat, MPEG2000MA, (Anhydrid / p-TsOH)

In einem 1 l Dreihalskolben werden bei 80°C 500 g Pluriol A2000E, 58 g 2-Methyl-propensäureanhydrid, 0,5 g MEHQ und 6 g p-TsOH eine Stunde gerührt. Nach einer Stunde wurde der Umsatz über die Bestimmung der Säurezahl ermittelt. Der Umsatz lag bei ca. 50%. Nach weiteren 20 h Rühren bei 80°C lag der Umsatz bei ca. 85%. Durch Zugabe von Wasser wurde der Ansatz auf 50% Festkörper eingestellt. Die wäßrige Monomerlösung war über 6 Monate lagerstabil.

### Beispiel 7: Laurylpolyethylenglyko12000methacrylat, LPEG2000MA, (Vergleichbeispiel nach WO 01/74736)

In einem 1 l Dreihalskolben wurden bei 90°C 500 g Laurylpolyethylenglykol2000, 58 g 2-Methyl-propensäureanhydrid, 0,5 g MEHQ und 5 g Triethylamin 4 Stunde gerührt. Nach 4 Stunden wurde der Umsatz über die Bestimmung der Säurezahl ermittelt. Der Umsatz lag bei ca. 100%. Durch Zugabe von Wasser wurde der Ansatz auf 50% Festkörper eingestellt. Die wäßrige Monomerlösung war um den Faktor 12 höherviskoser als die Lösung aus Beispiel 1. Nach einem Tag lagern bei Raumtemperatur war die Lösung z.T. geliert und konnte für die Polymersynthese nicht mehr verwendet werden.

### Beispiel 8: Methoxypolyethylenglyko14000methacrylat, MPEG4000MA (Vergleichsbeispiel nach EP 1 247 824 A2)

In einem 2 l Dreihalskolben mit angeschlossenem Wasserabscheider wurden 889 g Pluriol A4000E, 0,47 g Hydrochinon, 545 g Toluol vorgelegt und unter Rühren auf 90°C erwärmt. In diese Lösung wurden bei 90°C 59 g Methacrylsäure und 6,8 g konzentrierte Schwefelsäure eingerührt. Nun wurde unter Rückfluß erhitzt und solange gerührt, bis kein Wasser mehr abgeschieden wurde. Nach 13 Stunden Rühren unter Rückfluß wurde zur Kontrolle die Säurezahl ermittelt. Der Umsatz lag bei ca. 97 %. Nun wurde unter leichten Vakuum (50-250 mbar) das Lösungsmittel Toluol abdestilliert. Nach 4 Stunden Destillation war das Toluol nahezu vollständig entfernt. Durch Zugabe von Wasser wurde der Ansatz auf einen Festkörper von 50 % eingestellt.

Mittels GPC wurde der Anteil an dimerisiertem Methoxypolyethylenglyko14000methacrylat ermittelt. Dieser liegt bei 10,1 %.

### Analyse eines handelsüblichen Methoxypolyethylen-glykol4000methacrylats

Der Rohstoff Methoxypolyethylenglyko14000methacrylat wurde von einem Rohstoffhersteller zur Verfügung gestellt. Das Produkt wurde laut Herstellerangaben über die Umsetzung von Methacrylsäure mit Methoxypolyethylenglyko14000 in Gegenwart von p-Toluolsulfonsäure als Katalysator durch Ausschleppen des entstehenden Wassers mit einem Lösungsmittel hergestellt. Der Diol-Anteil liegt bei ca. 5-7%. Die wäßrige Monomerlösung war über 6 Monate lagerstabil.

### Beispiele Dispergiermittel

### Verwendung des erfindungsgemäßen Stoffgemisches zur Herstellung eines Dispergiermittels

### Beispiel 9: Dispergiermittel MPEG2000MA aus Beispiel 1

In einem 1 l Dreihalskolben werden 22 Volumenteile (VT) Wasser auf 60°C erhitzt und es werden unter Rühren kontinuierlich über 4 h 74 VT einer Monomermischung, bestehend aus 67 VT der Lösung aus Beispiel 1, 7 VT Methacrylsäure und 0,4 VT Mercaptopropionsäure, parallel zu 3 VT einer 18%igen Wasserstoffperoxidlösung zudosiert. Nach beendeter Zugabe werden innerhalb von einer h weitere 0,7 VT der Wasserstoffperoxidlösung zudosiert. Danach wird für eine h auf 75°C erhitzt, anschließend wird die Lösung abgekühlt, neutralisiert und auf einen Feststoffgehalt von 20% verdünnt.

### Beispiel 10: Dispergiermittel MPEG2000MA/MPEG500MA aus Beispiel 5

In einem 1 l Dreihalskolben werden 22 VT Wasser auf 60°C erhitzt und es werden unter Rühren kontinuierlich über 4 h 74 VT einer Monomermischung, bestehend aus 67 VT der Lösung aus Beispiel 5, 7 VT Methacrylsäure und 0,4 VT Mercaptopropionsäure, parallel zu 3 VT einer 18%igen Wasserstoffperoxidlösung zudosiert. Nach beendeter Zugabe werden innerhalb von einer Stunde weitere 0,7 VT der Wasserstoffperoxidlösung zudosiert. Danach wird für eine Stunde auf 75°C erhitzt, anschließend wird die Lösung abgekühlt, neutralisiert und auf einen Feststoffgehalt von 20% verdünnt.

### Beispiel 11: Dispergiermittel MPEG4000MA aus Beispiel 2

In einem 1 l Dreihalskolben werden 22 VT Wasser auf 60°C erhitzt und es werden unter Rühren kontinuierlich über 4 h 80 VT einer Monomermischung, bestehend aus 78 VT der Lösung aus Beispiel 2, 2 VT Methacrylsäure und 0,2 VT Mercaptopropionsäure, parallel zu 3 VT einer 10%igen Wasserstoffperoxidlösung zudosiert. Nach beendeter Zugabe werden innerhalb von einer Stunde weitere 0,7 VT der Wasserstoffperoxidlösung zudosiert. Danach wird für eine Stunde auf 75°C erhitzt, anschließend die Lösung abgekühlt, neutralisiert und auf einen Feststoffgehalt von 20% verdünnt.

### Beispiel 12: Dispergiermittel LPEG2000MA aus Beispiel 4

In einem 1 l Dreihalskolben werden 22 VT Wasser auf 60°C erhitzt und es werden unter Rühren kontinuierlich über 4 h 74 VT einer Monomermischung, bestehend aus 67 VT der Lösung aus Beispiel 4, 7 VT Methacrylsäure und 0,4 VT Mercaptopropionsäure, parallel zu 3 VT einer 18%igen Wasserstoffperoxidlösung zudosiert. Nach beendeter Zugabe werden innerhalb von einer Stunde weitere 0,7 VT der Wasserstoffperoxidlösung zudosiert. Danach wird für eine Stunde auf 75°C erhitzt, anschließend die Lösung abgekühlt, neutralisiert und auf einen Feststoffgehalt von 20% verdünnt.

### Verwendung von Stoffgemischen nach dem Stand der Technik

### Beispiel 13: Dispergiermittel MPEG2000MA aus Beispiel 6

In einem 1 l Dreihalskolben werden 22 VT Wasser auf 60°C erhitzt und es werden unter Rühren kontinuierlich über 4 h 74 VT einer Monomermischung, bestehend aus 67 VT der Lösung aus Beispiel 6, 7 VT Methacrylsäure und 0,4 VT Mercaptopropionsäure, parallel zu 3 VT einer 18%igen Wasserstoffperoxidlösung zudosiert. Nach beendeter Zugabe werden innerhalb von einer h weitere 0,7 VT der Wasserstoffperoxidlösung zudosiert. Danach wird für eine h auf 75°C erhitzt, anschließend wird die Lösung abgekühlt, neutralisiert und auf einen Feststoffgehalt von 20% verdünnt.

**Beispiel 14:** Dispergiermittel handelsübliches MPEG4000MA In einem 1 l Dreihalskolben werden 22 VT Wasser auf 60°C erhitzt und es werden unter Rühren kontinuierlich über 2 h 80 VT einer Monomermischung, bestehend aus 78 VT des handelsüblichen Methoxypolyethylenglyko14000methacrylats, 2 VT Methacrylsäure und 0,2 VT Mercaptopropionsäure, parallel zu 3 VT einer 10%igen Wasserstoffperoxidlösung zudosiert. Während der Monomermischung/Initiator-Zugabe gelierte der Ansatz. Die Wiederholung führte zu dem gleichen Ergebnis.

### Tabellen

**Tabelle 1**

| Vergleich Ausbreitmaß, Druckfestigkeit | | | | |
|---|---|---|---|---|
| Mittel | Dosierung | Ausbreitmaß Sofort | Ausbreitmaß 45 Minuten | Druckfestigkeit |
| BSP 9 | 0,8 | 53 cm | 52 cm | 39 N/mm2 |
| BSP 12 | 0,8 | 55 cm | 52 cm | 35 N/mm2 |
| BSP 13 | 0,8 | 53 cm | 40 cm | 33 N/mm2 |

Betonrezeptur: 400 kg Zement, 170 kg Wasser, 1786 kg Zuschlag 0/16

Die Tabelle zeigt, daß die erfindungsgemäße Polymerlösung nach Beispiel 9 und 12 in Wirksamkeit, langanhaltender verflüssigender Wirkung und höheren Frühfestigkeiten einem Vergleichspolymer nach Beispiel 13 überlegen sind.

**Tabelle 2**

| Ausbreitmaß bei Verwendung erfindungsgemäßer Dispergiermittel | | | | | |
|---|---|---|---|---|---|
| Dispergiermittel | Dosierung | 5 min | 30 min | 60 min | 90 min |
| BSP 10 | 0,9 | 67 | 70 | 69 | 64 |
| BSP 9 | 0,9 | 63 | 62 | 60 | 53 |

Es wird ein Beton der Konsistenzklasse F6 nach EN 206-1 verwendet. In einem Zwangsmischer werden 34,7 kg Gesteinskörnung der Sieblinie B 16, 7,0 kg Zement (CEM I 52,5 R), 1,8 kg Flugasche, 3,5 kg Wasser und das Zusatzmittel nach Norm gemischt. Das Ausbreitmaß wurde nach EN 12350-5 bestimmt. Die Messungen erfolgten 5, 30, 60 und 90 Minuten nach der 1. Wasserzugabe. Die Dispergiermittel gemäß Beispiel 10 und 9 wurden auf einen Feststoffgehalt von 20 % eingestellt und es wurde ein Entschäumer zugefügt (Ausbreitmaße in cm).

Die Tabelle belegt, daß die Verwendung eines Stoffgemisches, welches neben einem Polyether(alkyl)acrylat der allgemeinen Formel (3) ein Polyether(alkyl)acrylat der allgemeinen Formel (5) enthält, ein Dispergiermittel erhalten wird, bei welchem die verflüssigende Wirkung länger anhält.

## Patentansprüche

1. Verfahren zum Herstellen eines Stoffgemisches, wobei zumindest ein Carbonsäureanhydrid der allgemeinen Formel 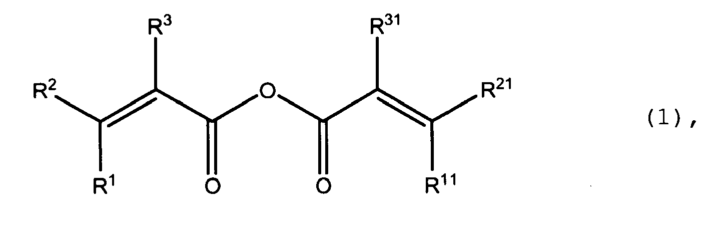 bei der R¹, R², R³, R¹¹, R²¹ und R³¹ jeweils ein Wasserstoffatom oder eine Alkylgruppe darstellen,
mit zumindest einer Polyetherverbindung der allgemeinen Formel (2)
OH-R⁴-R⁵ (2),
bei welcher R⁴ eine Kette der Form
-R^{4,1}-O-R^{4,2}-O-R^{4,3}-O-...-R^{4,i}-O-...-R^{4,m}-O-
mit m ≥ 10 ist, wobei jede der Untereinheiten -R^{4,i}-O- mit i = 1...m eine Struktur 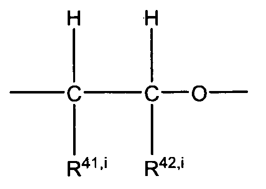 aufweist, wobei R^{41,i} und/oder R^{42,i} jeweils ein Wasserstoffatom, eine Alkyl-, eine Aryl-, eine Alkylaryl- oder eine Alkenylgruppe darstellen, und R⁵ eine Alkylgruppe darstellt,
in Gegenwart zumindest eines Katalysators umgesetzt wird, wobei zumindest ein Polyether(alkyl)acrylat der allgemeinen Formel 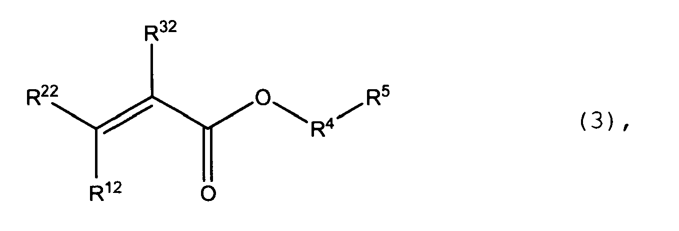 bei dem R¹² = R¹ oder R¹¹, R²² = R² oder R²¹ und R³² = R³ oder R³¹ ist,
als Bestandteil des Stoffgemisches entsteht,
wobei als Katalysator zumindest eine neutrale Verbindung der Formel
MLₓ (7)
verwendet wird, bei der
das Zentralatom M ein Metall der 3. oder 4. Hauptgruppe oder der 3. - 8. Nebengruppe ist und
L für einen Liganden steht, der aus einer Gruppe ausgewählt wird, die Halogenide, Wasserstoff, Chelatliganden und Liganden enthält, die über ein C-Atom oder über ein O-, ein P-, ein S- oder ein N-Atom direkt an das Zentralatom M binden,
wobei die Liganden L entweder gleich oder voneinander verschieden sein können und
wobei x ≥ 2 und ≤ 6 ist.

2. Verfahren nach Anspruch 1, **dadurch gekennzeichnet, daß** es sich bei dem Liganden L um einen Alkyl-, einen Alkoxy-, einen Alkylcarboxy- oder einen Arylrest handelt.

3. Verfahren nach Anspruch 2, **dadurch gekennzeichnet, daß** es sich bei dem Liganden L um einen C₁-C₂₂-Alkyl-, einen C₁-C₂₂-Alkoxy-, einen C₁-C₂₂-Alkylcarboxy- oder einen C₆-C₂₂-Arylreste, vorzugsweise einen C₁-C₈-Alkyl-, einen C₁-C₈-Alkoxy-, einen C₁-C₈-Alkylcarboxy- oder einen C₆-C₈-Arylrest, handelt.

4. Verfahren nach einem der Ansprüche 1 bis 3, **dadurch gekennzeichnet, daß** es sich bei dem Zentralatom um ein Metall der 3. oder 4. Hauptgruppe oder der 4. oder 8. Nebengruppe des Periodensystems handelt.

5. Verfahren nach einem der Ansprüche 1 bis 4, **dadurch gekennzeichnet, daß** neben der Polyetherverbindung mit der allgemeinen Formel (2) zumindest eine weitere Polyetherverbindung mit der allgemeinen Formel
OH-R⁶-R⁷ (4),
bei welcher R⁶ eine Kette der Form
-R^{6,1}-O-R^{6,2}-O-R^{6,3}-O-...-R^{6,j}-O-...-R^{6,o}-O-
mit o ≥ 5 ist, wobei jede der Untereinheiten -R^{6,j}-O- mit j = 1...o eine Struktur 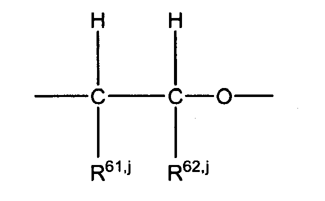 aufweist, wobei R^{61,j} und/oder R^{62,j} jeweils ein Wasserstoffatom, eine Alkyl-, eine Aryl-, eine Alkylaryl- oder eine Alkenylgruppe darstellen, und R⁷ eine Alkylgruppe darstellt,
mit dem zumindest einen Carbonsäureanhydrid der allgemeinen Formel (1) umgesetzt wird, wobei zumindest ein weiteres Polyether(alkyl)acrylat der allgemeinen Formel 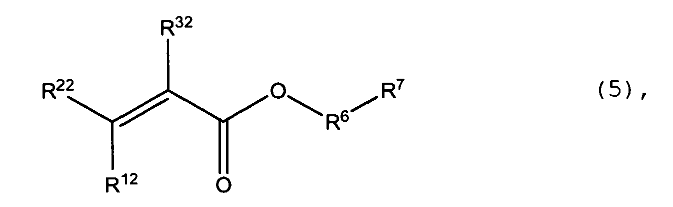 bei dem R¹² = R¹ oder R¹¹, R²² = R² oder R²¹ und R³² = R³ oder R³¹ ist, als Bestandteil des Stoffgemisches entsteht.

6. Verfahren nach einem der Ansprüche 1 bis 5, **dadurch gekennzeichnet, daß** der Wert m in dem Bereich von 10 bis 140 und vorzugsweise in dem Bereich von 20 bis 110 liegt.

7. Verfahren nach einem der Ansprüche 5 oder 6, **dadurch gekennzeichnet, daß** der Wert o in dem Bereich von 5 bis 80 und vorzugsweise in dem Bereich von 10 bis 35 liegt.

8. Verfahren nach einem der Ansprüche 5 bis 7, **dadurch gekennzeichnet, daß** o ≤ m - 5 ist.

9. Verfahren nach einem der Ansprüche 1 bis 8, **dadurch gekennzeichnet, daß** der Rest R⁵ bzw. die Reste R⁵ und R⁷ unverzweigte oder verzweigte C₁-C₂₀-Alkylreste sind.

10. Verfahren nach einem der Ansprüche 1 bis 9, **dadurch gekennzeichnet, daß** der Rest R⁵ bzw. die Reste R⁵ und R⁷ unverzweigte C₁-C₈-Alkylreste sind.

11. Verfahren nach einem der Ansprüche 1 bis 10, **dadurch gekennzeichnet, daß** sämtliche Untereinheiten -R^{4,i}-O- der Kette
-R^{4,1}-O-R^{4,2}-O-R^{4,3}-O-...-R^{4,i}-O-...-R^{4,m}-O-
und/oder die Untereinheiten -R^{6,j}-O- der Kette
-R^{6,1}-O-R^{6,2}-O-R^{6,3}-O-...-R^{6,j}-O-...-R^{6,o}-O-
identisch sind, oder so gewählt sind, daß die Kette bzw. die Ketten einen Block-Copolymer oder einen statistischen oder alternierenden Copolymer darstellen.

12. Verfahren nach einem der Ansprüche 5 bis 11, **dadurch gekennzeichnet, daß** der Rest R⁵ ungleich dem Rest R⁷ ist.

13. Verfahren nach einem der Ansprüche 1 bis 12, **dadurch gekennzeichnet, daß** die zumindest eine Verbindung (7) in einer Menge von 0,001 - 5,0 Mol-%, vorzugsweise in einer Menge von 0,1 - 2,0 Mol-%, bezogen auf die Summe der Stoffmengen der Polyetherverbindungen, verwendet wird.

14. Verfahren nach einem der Ansprüche 1 bis 13, **dadurch gekennzeichnet, daß** die zumindest eine Polyetherverbindung der allgemeinen Formel (2) mit dem Carbonsäureanhydrid der allgemeinen Formel (1) bei einer Reaktionstemperatur von 20°C bis 140°C, vorzugsweise von 40°C bis 110°C, umgesetzt wird.

15. Verfahren nach einem der Ansprüche 1 bis 14, **dadurch gekennzeichnet, daß** die zumindest eine Polyetherverbindung der allgemeinen Formel (2) mit dem Carbonsäureanhydrid der allgemeinen Formel (1) über eine Reaktionszeit von 1 bis 8 Stunden, vorzugsweise von 2 bis 6 Stunden, umgesetzt wird.

16. Stoffgemisch mit zumindest einem Polyether(alkyl)-acrylat, erhältlich durch ein Verfahren nach einem der Ansprüche 1 bis 15.

17. Verwendung des Stoffgemisches gemäß Anspruch 16 zur Herstellung eines Dispergiermittels für Alkali- und Erdalkali-Ionen enthaltende anorganische Stoffe bzw. Stoffgemische.

18. Verwendung des Stoffgemisches gemäß Anspruch 17, wobei dem Stoffgemisch zur Herstellung eines Dispergiermittels eine oder mehrere Monomer-Verbindungen mit den allgemeinen Formeln 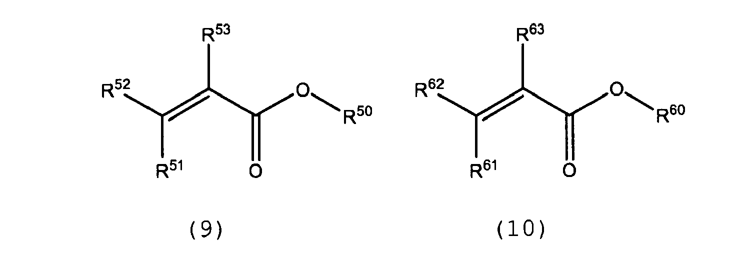 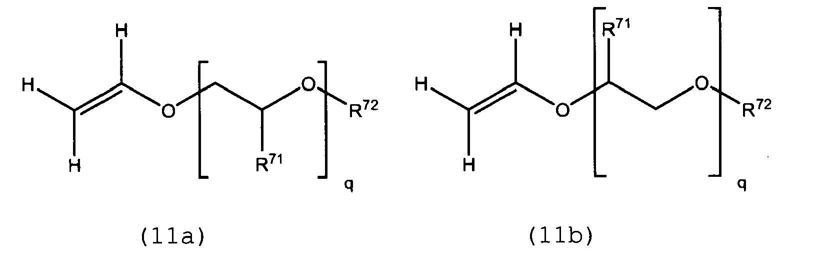 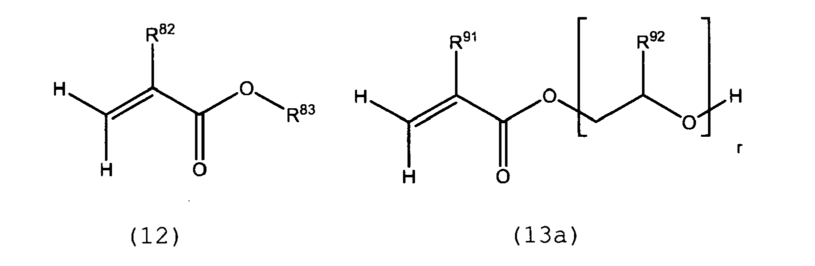 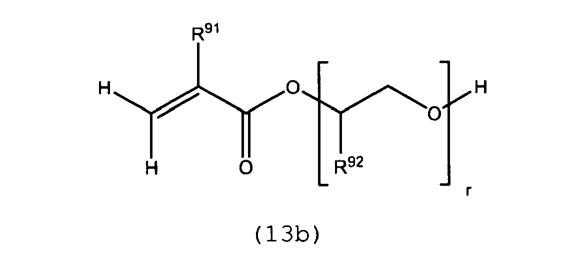 zugefügt werden, wobei die Reste R⁵¹, R⁵², R⁵³, R⁷¹, R⁸², R⁹¹ und R⁹² jeweils entweder ein Wasserstoffatom oder eine CH₃-Gruppe, die Reste R⁶¹, R⁶² und R⁶³ jeweils entweder ein Wasserstoffatom, eine CH₃-Gruppe, eine CH₂COOH-Gruppe oder eine COOH-Gruppe, die Reste R⁵⁰ und R⁶⁰ jeweils entweder ein Wasserstoffatom, ein Alkali- oder Erdalkaliion, ein Alkylamin oder ein Oxioalkylamin, der Rest R⁷² ein Wasserstoffatom oder eine C₁-C₂₀-Alkylgruppe und der Rest R⁸³ eine C₁-C₂₀-Alkylgruppe, eine Hydroxylalkylgruppe, eine Sulfoalkylgruppe, eine Sulfonsäuregruppe oder eine quartärnere Amminogruppe darstellen, und wobei q eine ganze Zahl ≥ 5 und ≤ 140 und r eine ganze Zahl ≥ 1 und ≤ 10 darstellt.

19. Verwendung des Stoffgemisches gemäß Anspruch 17 oder 18, wobei das Stoffgemisch 50 - 95 Gew.-% der Verbindung der allgemeinen Formel (3) enthält.

20. Verwendung des Stoffgemisches gemäß einem der Ansprüche 17 bis 19, wobei das Stoffgemisch zusätzlich zu den 50 - 95 Gew.-% der Verbindung der allgemeinen Formel (3) 5 - 50 Gew.-% der Verbindung der allgemeinen Formel (5) enthält.

21. Dispergiermittel für Alkali- und Erdalkali-Ionen enthaltende anorganische Stoffe bzw. Stoffgemenge, erhältlich durch ein Verfahren, das folgende Schritte aufweist:
Herstellen eines Stoffgemisches gemäß einem der Patentansprüche 1 bis 15,
Polymerisieren des Stoffgemisches.

22. Dispergiermittel nach Anspruch 21, wobei dem Stoffgemisch vor dem Polymerisieren zumindest eine der Verbindungen der allgemeinen Formeln (9), (10), (11a), (11b), (12), (13a) und/oder (13b) zugesetzt wird.

23. Dispergiermittel nach Anspruch 22, wobei dem Stoffgemisch vor dem Polymerisieren 1 - 50 Gew-% zumindest einer der Verbindungen der allgemeinen Formeln (10), (12), (13a) und (13b) zugemischt wird.

24. Dispergiermittel nach einem der Ansprüche 21 oder 23, wobei dem Stoffgemisch vor dem Polymerisieren 1 - 85 Gew-% einer Stoffmischung der Stoffe (11a) und (11b), und bevorzugt 50 - 80 Gew-% einer Stoffmischung der Stoffe (11a) und (11b) mit q ≥ 20 und ≤ 140, zugemischt wird.

25. Dispergiermittel nach einem der Ansprüche 21 bis 24, wobei das Dispergiermittel ein mittleres Molekulargewicht Mₙ zwischen 3000 und 750000 Dalton und bevorzugt zwischen 5000 und 50000 Dalton aufweist.

26. Dispergiermittel nach einem der Ansprüche 21 bis 25, wobei die molekulare Uneinheitlichkeit des Dispergiermittels bei 2 - 18 und bevorzugt bei 3 - 12 liegt.

## Claims

1. A method for producing a mixture of materials, whereby at least one carboxylic acid anhydride of general formula 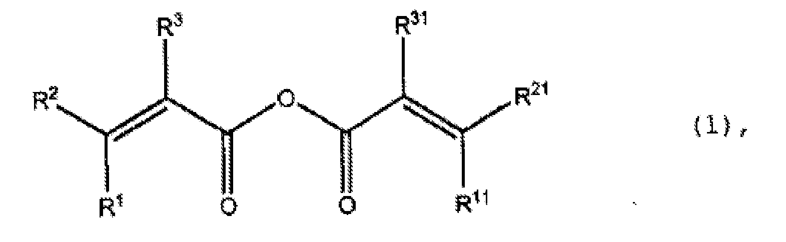 in which the R¹, R², R³, R¹¹, R²¹, and R³¹ respectively represent a hydrogen atom or an alkyl group,
with at least one polyether compound of general formula (2)
OH-R⁴-R⁵ (2),
in which R⁴ is a chain of the form
-R^{4,1}-O-R^{4,2}-O-R^{4,3}-O-...-R^{4,i}-O-...-R^{4,m}-O-
with m ≥ 10, whereby each of the subunits -R^{4,i}-O- with i = 1 ... m has a structure 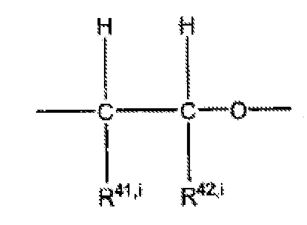 whereby R^{41,i} and /or R^{42,i} respectively each represents a hydrogen atom, an alkyl group, an aryl group, an alkylaryl group, or an alkenyl group, and R⁵ represents an alkyl group,
is converted in the presence of at least one catalyst, whereby at least one polyether (alkyl)acrylate of general formula 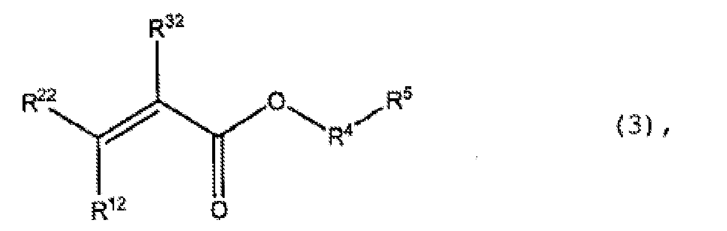 in which R¹² = R¹ or R¹¹, R²² = R² or R²¹, and R³² = R³ or R³¹,
is produced as a component of the mixture of materials,
whereby, as a catalyst, at least one neutral compound of formula
MLₓ (7)
is used, in which the central atom M is a metal from the 3rd or 4th
main group or the 3rd to 8th subgroups, and L stands for a ligand selected from a group that contains halides, hydrogen, chelating ligands, and ligands, which are bound directly to the central atom M through a C atom or through an O atom, a P atom, an S atom, or an N atom,
whereby the ligands L can be either the same or different from each other and whereby x > 2 and ≤ 6.

2. A method according to Claim 1, **characterised in that** the ligand L is either an alkyl radical, an alkoxy radical, an alkylcarboxy radical, or an aryl radical.

3. A method according to Claim 2, **characterised in that** the ligand L is a C₁-C₂₂ alkyl radical, a C₁-C₂₂ alkoxy radical, a C₁-C₂₂ alkylcarboxy radical, or a C₆-C₂₂ aryl radical, preferably a C₁-C₈ alkyl radical, a C₁-C₈ alkoxy radical, a C₁-C₈ alkylcarboxy radical, or a C₆-C₈ aryl radical.

4. A method according to one of Claims 1 through 3, **characterised in that** the central atom is a metal from the 3rd or 4th main group or the 4th or 8th subgroup of the periodic table.

5. A method according to one of Claims 1 through 4, **characterised in that** along with the polyether compound of general formula (2), at least one additional polyether compound of general formula
OH-R⁶-R⁷ (4),
in which R⁶ is a chain of form
-R^{6,1}-O-R^{6,2}-O-R^{6,3}-O-...-R^{6,j}-O-...-R^{6,o}-O-
with o ≥ 5, whereby each of the subunits -R^{6,j}-O- with j = 1 ... o has a structure 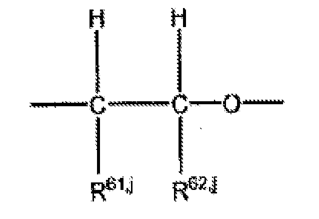 whereby R^{61,j} and/or R^{62,j}, respectively, each represents a hydrogen atom, an alkyl group, an aryl group, an alkylaryl group, or an alkenyl group, and R⁷ represents an alkyl group, with which at least one further carboxylic-acid anhydride with general formula (1) is converted, whereby at least one additional polyether(alkyl) acrylate of general formula 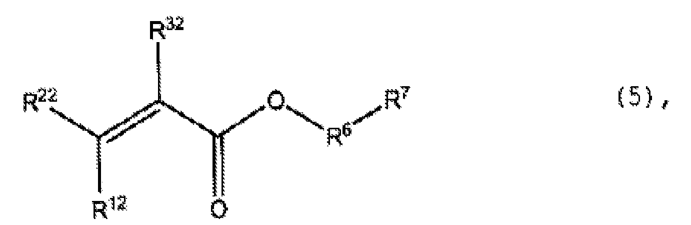 in which R¹² = R¹ or R¹¹, R²² = R² or R²¹, and R³² = R³ or R³¹, is produced as a component of the mixture of materials.

6. A method according to one of Claims 1 through 5, **characterised in that** the value m is in the range from 10 to 140 and preferably in the range from 20 to 110.

7. A method according to one of Claims 5 or 6, **characterised in that** the value o is in the range from 50 to 80 and preferably in the range from 10 to 35.

8. A method according to one of Claims 5 through 7, **characterised in that** o < m - 5.

9. A method according to one of Claims 1 through 8, **characterised in that** the radical R⁵ or the radicals R⁵ and R⁷ are branched or linear C₁-C₂₀ alkyl radicals.

10. A method according to one of Claims 1 through 9, **characterised in that** the radical R⁵ or the radicals R⁵ and R⁷ are linear C₁-C₈ alkyl radicals.

11. A method according to one of Claims 1 through 10, **characterised in that** all subunits -R^{4,1} -O- of the chain
-R^{4,1}-O-R^{4,2}-O-R^{4,3}-O-...-R^{4,i}-O-...-R^{4,m}-O-
and/or the subunits -R^{6,j}-O- of the chain
-R^{6,1}-O-R^{6,2}-O-R^{6,3}-O- ... -O-R^{6,j}- ... -R^{6,o}-O-
are identical, or are selected so that the chain or chains represent(s) a block copolymer or a statistical or an alternating copolymer.

12. A method according to one of Claims 5 through 11, **characterised in that** the radical R⁵ is not equal to the radical R⁷.

13. A method according to one of Claims 1 through 12, **characterised in that** the at least one compound (7) is used in a quantity of 0.001-5.0 mol%, preferably in a quantity of 0.1-2.0 mol%, with respect to the sum of the material quantities of the polyether compounds.

14. A method according to one of Claims 1 through 13, **characterised in that** the at least one polyether compound of general formula (2) is converted with the carboxylic-acid anhydride of general formula (1) at a reaction temperature from 20°C to 140°C, preferably from 40°C to 110°C.

15. A method according to one of Claims 1 through 14, **characterised in that** the at least one polyether compound of general formula (2) is converted with the carboxylic-acid anhydride of general formula (1) over a reaction time from 1 to 8 hours, preferably from 2 to 6 hours.

16. A mixture of materials with at least one polyether(alkyl) acrylate obtainable through a method according to one of Claims 1 through 15.

17. Use of a mixture of materials according to Claim 16 for the production of a dispersing agent for inorganic materials or a mixture of materials containing alkali ions and alkaline-earth ions.

18. Use of the mixture of materials according to Claim 17, whereby to the mixture of materials for the production of a dispersing agent, one or more monomer compounds of general formulas 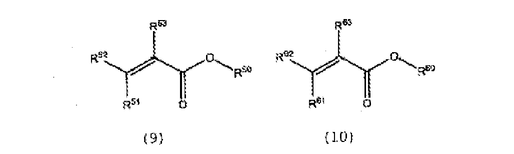 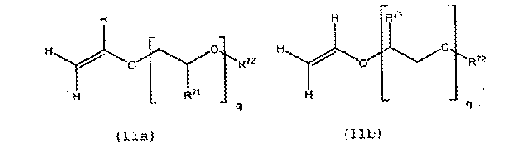 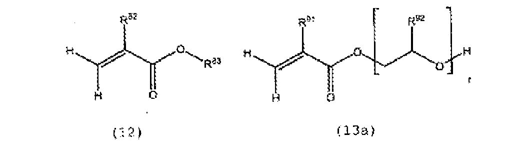 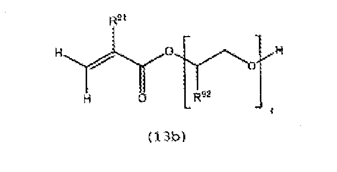 are added, whereby radicals R⁵¹, R⁵², R⁵³, R⁷¹, R⁸², R⁹¹, and R⁹² respectively each represents either a hydrogen atom or a CH₃ group, radicals R⁶¹, R⁶², and R⁶³ respectively each represents either a hydrogen atom, a CH₃ group, a CH₂COOH group, or a COOH group, radicals R⁵⁰ and R⁶⁰ respectively each represents a hydrogen atom, an alkali ion or an alkaline-earth ion, an alkyl amine, or an oxioalkyl amine, radical R⁷² represents a hydrogen atom or a C₁-C₂₀ alkyl group, and radical R⁸³ represents a C₁-C₂₀ alkyl group, a hydroxylalkyl group, a sulfoalkyl group, a sulfonic-acid group, or a quarternary amino group, and whereby q represents a whole number ≥ 5 and < 140 and r represents a whole number > 1 and < 10.

19. Use of the mixture of materials according to Claim 17 or 18, whereby the mixture of materials contains 50-95 wt% of the compound of general formula (3).

20. Use of the mixture of materials according to one of the Claims 17 through 19, whereby the mixture of materials contains, in addition to 50-95 wt% of the compound of general formula (3), 5-50 wt% of the compound of general formula (5).

21. A dispersing agent for inorganic materials or a mixture of materials containing alkali ions and alkaline-earth ions, obtainable through a method that has the following steps:
creating a mixture of materials according to one of Claims 1 through 15
polymerising the mixture of materials.

22. A dispersing agent according to Claim 21, whereby at least one of the compounds of general formulas (9), (10), (11a), (11b),(12), (13a), and/or (13b) is added to the mixture of materials before the polymerisation.

23. A dispersing agent according to Claim 22, whereby 1-50 wt% of at least one of the compounds of the general formulas (10), (12), (13a), and (13b) is added to the mixture of materials before the polymerisation.

24. A dispersing agent according to one of Claims 21 or 23, whereby 1-85 wt% of a mixture of materials (11a) and (11b), and preferably 50-80 wt% of a mixture of materials (11a) and (11b) and with q ≥ 20 and ≤ 140, is added to the mixture of materials before the polymerisation.

25. A dispersing agent according to one of Claims 21 through 24, whereby the dispersing agent has an average molecular weight Mₙ between 3000 and 750,000 daltons and preferably between 5000 and 50,000 daltons.

26. A dispersing agent according to one of Claims 21 through 25, whereby the molecular nonuniformity of the dispersing agent is between 2 - 18 and preferably between 3 - 12.

## Revendications

1. Procédé pour la préparation d'un mélange de substances, dans lequel on fait réagir au moins un anhydride d'acide carboxylique de formule générale 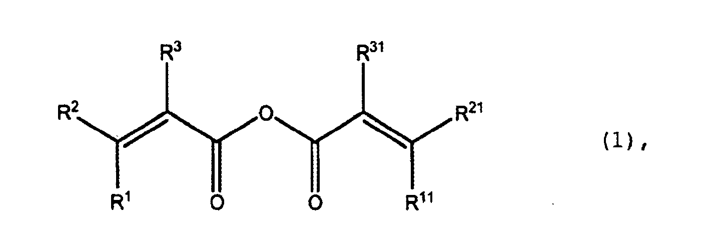 où R¹, R², R³, R¹¹, R²¹ et R³¹ représentent à chaque fois un atome d'hydrogène ou un groupe alkyle,
avec au moins un composé de type polyéther de formule générale (2)
OH-R⁴-R⁵ (2),
où R⁴ est une chaîne de forme
-R^{4,1}-O-R^{4,2}-O-R^{4,3}-O-...-R^{4,i}-O-...-R^{4,m}-O-
avec m ≥ 10, tandis que chacune des sous-unités -R^{4,i}-O- avec i = 1...m présente une structure 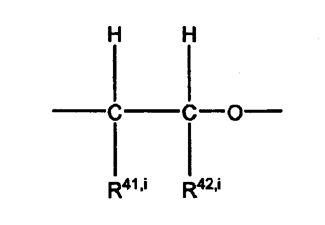 tandis que R^{41,i} et/ou R^{42,i} représentent à chaque fois un atome d'hydrogène ou un groupe alkyle, aryle, alkylaryle ou alcényle, et R⁵ représente un groupe alkyle,
en présence d'au moins un catalyseur,
tandis qu'il se forme au moins un polyéther(alkyl)acrylate de formule générale 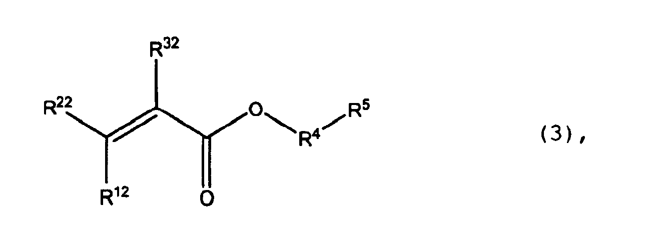 où R¹² = R¹ ou R¹¹, R²² = R² ou R²¹ et R³² = R³ ou R³¹,
en tant que composant du mélange de substances,
tandis qu'on utilise comme catalyseur au moins un composé neutre de formule
MLₓ (7)
dans laquelle l'atome central M est un métal du 3^{e} ou 4^{e} groupe principal ou du 3^{e} - 8^{e} groupe secondaire et
L désigne un ligand qui est choisi dans un groupe qui comprend les halogénures, l'hydrogène, les ligands de chélation et les ligands, qui sont liés par l'intermédiaire d'un atome de C ou par l'intermédiaire d'un atome de O, P S ou N directement à l'atome central M,
tandis que les ligands L peuvent être identiques ou différents les uns des autres et
tandis que x ≥ 2 et ≤ 6.

2. Procédé selon la revendication 1, **caractérisé par le fait qu'**il s'agit, en ce qui concerne le ligand L, d'un reste alkyle, alcoxy, alkylcarboxy ou aryle.

3. Procédé selon la revendication 2, **caractérisé par le fait qu'**il s'agit, en ce qui concerne le ligand L, d'un reste alkyle en C₁-C₂₂, alcoxy en C₁-C₂₂, alkylcarboxy en C₁-C₂₂ ou aryle en C₆-C₂₂, de préférence un reste alkyle en C₁-C₈, alcoxy en C₁-C₈, alkylcarboxy en C₁-C₈ ou aryle en C₆-C₈.

4. Procédé selon l'une des revendications 1 à 3, **caractérisé par le fait qu'**il s'agit, en ce qui concerne l'atome central, d'un métal du 3^{e} ou 4^{e} groupe principal ou du 4^{e} ou 8^{e} groupe secondaire de la classification périodique des éléments.

5. Procédé selon l'une des revendications 1 à 4, **caractérisé par le fait que**, outre le composé de type polyéther ayant la formule générale (2), on fait réagir au moins un autre composé de type polyéther ayant la formule générale
OH-R⁶-R⁷ (4),
dans laquelle R⁶ est une chaîne de forme
-R^{6,1}-O-R^{6,2}-O-R^{6,3}-O-...-R^{6,j}-O-...-R^{6.0}-O-
avec o ≥ 5, tandis que chacune des sous-unités -R^{6,j}-O- avec j = 1...o présente une structure 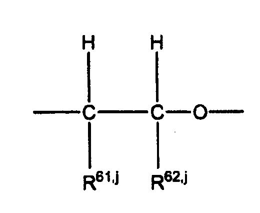 tandis que R^{61,j} et/ou R^{62,j} représente à chaque fois un atome d'hydrogène ou un groupe alkyle, aryle, alkylaryle ou alcényle, et R⁷ représente un groupe alkyle,
avec le au moins un anhydride d'acide carboxylique de formule générale (1), tandis qu'au moins un autre polyéther(alkyl)acrylate de formule générale 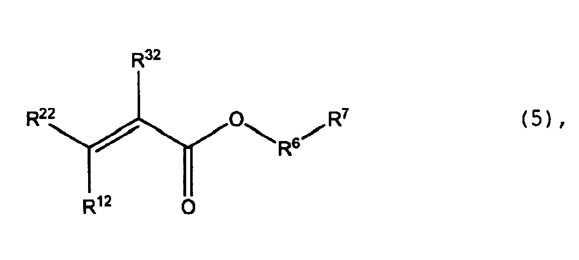 où R¹² = R¹ ou R¹¹, R²² = R² ou R²¹ et R³² = R³ ou R³¹, se forme comme composant du mélange de substances.

6. Procédé selon l'une des revendications 1 à 5, **caractérisé par le fait que** la valeur m se situe dans l'intervalle de 10 à 140 et de préférence dans l'intervalle de 20 à 110.

7. Procédé selon l'une des revendications 5 ou 6, **caractérisé par le fait que** la valeur o se situe dans l'intervalle de 5 à 80 et de préférence dans l'intervalle de 10 à 35.

8. Procédé selon l'une des revendications 5 à 7, **caractérisé par le fait que** o ≤ m - 5.

9. Procédé selon l'une des revendications 1 à 8, **caractérisé par le fait que** le reste R⁵ ou respectivement les restes R⁵ et R⁷ sont des restes alkyle en C₁-C₂₀ non-ramifiés ou ramifiés.

10. Procédé selon l'une des revendications 1 à 9, **caractérisé par le fait que** le reste R⁵ ou respectivement les restes R⁵ et R⁷ sont des restes alkyle en C₁-C₈ non-ramifiés.

11. Procédé selon l'une des revendications 1 à 10, **caractérisé par le fait que** l'ensemble des sous-unités -R^{4,i}-O- de la chaîne
-R^{4,1}-O-R^{4,2}-O-R^{4,3}-O-...-R^{4,i}-O-...-R^{4,m}-O-
et/ou les sous-unités -R^{6,j}-O- de la chaîne
-R^{6,1}-O-R^{6,2}-O-R^{6,3}-O-...-R^{6,j}-O-...-R^{6,o}-O-
sont identiques ou sont choisies de telle manière que la chaîne ou respectivement les chaînes représentent un copolymère séquencé ou un copolymère statistique ou alternant.

12. Procédé selon l'une des revendications 5 à 11, **caractérisé par le fait que** le reste R⁵ est différent du reste R⁷.

13. Procédé selon l'une des revendications 1 à 12, **caractérisé par le fait que** le au moins un composé (7) est utilisé en une quantité de 0,001 - 5,0 mol-%, de préférence dans une quantité de 0,1 - 2,0 mol-%, par rapport à la somme des quantités de substances des composés de type polyéther.

14. Procédé selon l'une des revendications 1 à 13, **caractérisé par le fait que** le au moins un composé de type polyéther de formule générale (2) est mis à réagir avec l'anhydride d'acide carboxylique de formule générale (1) à une température de réaction de 20°C à 140°C, de préférence de 40°C à 110°C.

15. Procédé selon l'une des revendications 1 à 14, **caractérisé par le fait que** le au moins un composé de type polyéther de formule générale (2) est mis à réagir avec l'anhydride d'acide carboxylique de formule générale (1) sur une durée de réaction de 1 à 8 heures, de préférence de 2 à 6 heures.

16. Mélange de substances avec au moins un polyéther(alkyl)acrylate, pouvant être obtenu conformément à un procédé selon l'une des revendications 1 à 15.

17. Utilisation du mélange de substances selon la revendication 16 pour la préparation d'un agent dispersant pour des substances ou des mélanges de substances inorganiques contenant des ions alcalins et alcalino-terreux.

18. Utilisation du mélange de substances selon la revendication 17, dans laquelle on ajoute au mélange de substances pour la préparation d'un agent dispersant un ou plusieurs composés monomère ayant les formules générales 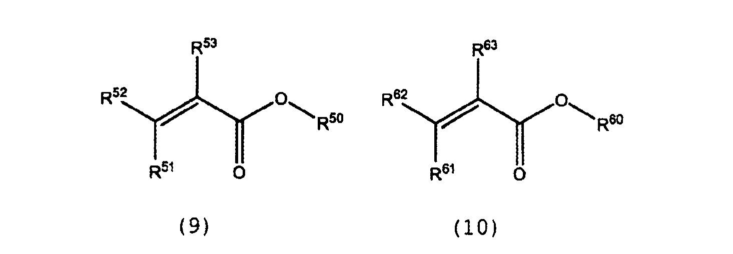 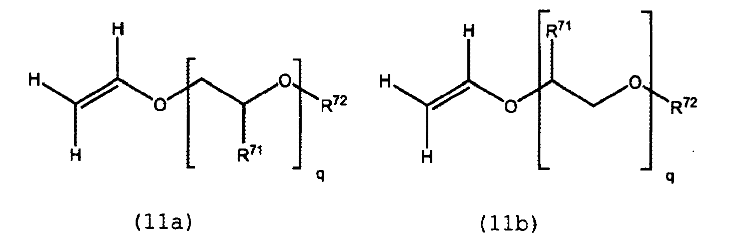 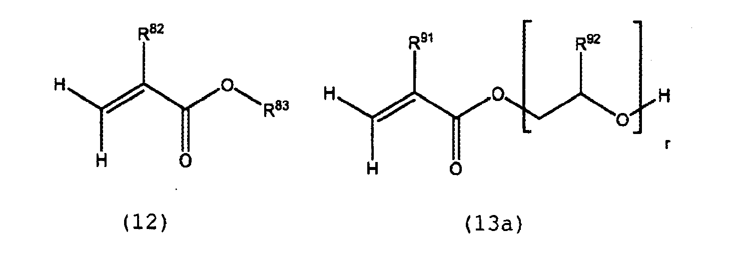 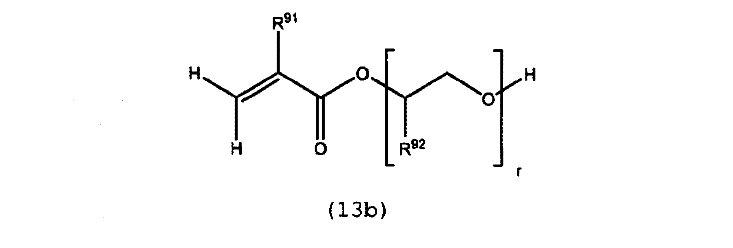 tandis que les restes R⁵¹, R⁵², R⁵³, R⁷¹, R⁸², R⁹¹ et R⁹² représentent à chaque fois un atome d'hydrogène ou un groupe CH₃, les restes R⁶¹, R⁶² et R⁶³ représentent à chaque fois un atome d'hydrogène, un groupe CH₃, un groupe CH₂COOH ou un groupe COOH, les restes R⁵⁰ et R⁶⁰ représentent à chaque fois un atome d'hydrogène, un ion alcalin ou alcalino-terreux, une alkylamine ou une oxioalkylamine, le reste R⁷² représente un atome d'hydrogène ou un groupe alkyle en C₁-C₂₀ et le reste R⁸³ représente un groupe alkyle en C₁-C₂₀, un groupe hydroxyalkyle, un groupe sulfoalkyle, un groupe acide sulfonique ou un groupe amino quaternaire, et tandis que q représente un nombre entier ≥ 5 et ≤ 140 et r représente un nombre entier ≥ 1 et ≤ 10.

19. Utilisation du mélange de substances selon la revendication 17 ou 18, dans laquelle le mélange de substances contient 50-95% en poids du composé de formule générale (3).

20. Utilisation du mélange de substances selon l'une des revendications 17 à 19, dans laquelle le mélange de substances contient en plus des 50-95% en poids du composé de formule générale (3), 5-50% en poids du composé de formule générale (5).

21. Agent dispersant pour des substances ou respectivement des mélanges de substances inorganiques contenant des ions alcalins et alcalino-terreux, pouvant être obtenu selon un procédés qui présente les étapes suivantes:
préparation d'un mélange de substances selon l'une des revendications 1 à 15,
polymérisation du mélange de substances.

22. Agent dispersant selon la revendication 21, dans lequel on ajoute au mélange de substances avant la polymérisation au moins l'un des composés de formules générales (9), (10), (11a), (11b), (12), (13a) et/ou (13b).

23. Agent dispersant selon la revendication 22, dans lequel on mélange avec le mélange de substances avant la polymérisation 1-50% en poids d'au moins l'un des composés de formules générales (10), (12), (13a) et (13b).

24. Agent dispersant selon l'une des revendications 21 ou 23, dans lequel on mélange avec le mélange de substances avant la polymérisation 1-85% en poids d'un mélange de substances des substances (11a) et (11b), et de préférence 50-80% en poids d'un mélange de substance des substances (11a) et (11b) avec q ≥ 20 et ≤ 140.

25. Agent dispersant selon l'une des revendications 21 à 24, dans lequel l'agent dispersant présente une masse moléculaire moyenne Mₙ entre 3000 et 750000 daltons et de préférence entre 5000 et 50000 daltons.

26. Agent dispersant selon l'une des revendications 21 à 25, dans lequel l'hétérogénéité moléculaire de l'agent dispersant est de 2-18 et de préférence de 3-12.
